(19) Europäisches Patentamt / European Patent Office / Office européen des brevets

(11) **EP 3 435 056 B1**

(12) **EUROPÄISCHE PATENTSCHRIFT**

(45) Veröffentlichungstag und Bekanntmachung des Hinweises auf die Patenterteilung:
**18.12.2019   Patentblatt 2019/51**

(21) Anmeldenummer: **18183873.1**

(22) Anmeldetag: **17.07.2018**

(51) Int Cl.:
**G01M 11/08** (2006.01)   **B41F 33/00** (2006.01)
**G01J 3/50** (2006.01)   **G01N 21/88** (2006.01)
**G06K 9/20** (2006.01)   **G06T 7/11** (2017.01)
**G01N 21/956** (2006.01)

(54) **DRUCKINSPEKTIONSVORRICHTUNG ZUR OPTISCHEN INSPEKTION EINES DRUCKBILDES EINES DRUCKOBJEKTS**

PRESSURE INSPECTION DEVICE FOR THE OPTICAL INSPECTION OF A PRINTING IMAGE OF A PRINTED OBJECT

DISPOSITIF D'INSPECTION DE PRESSION DESTINÉ À L'INSPECTION OPTIQUE D'UNE IMAGE D'IMPRESSION D'UN OBJET D'IMPRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2017   DE 102017116882**

(43) Veröffentlichungstag der Anmeldung:
**30.01.2019   Patentblatt 2019/05**

(73) Patentinhaber: **Bundesdruckerei GmbH**
**10969 Berlin (DE)**

(72) Erfinder:
• **GRIESER, Ralf**
**10589 Berlin (DE)**
• **FRANEK, Lucas**
**81369 München (DE)**

(74) Vertreter: **Patentship**
**Patentanwaltsgesellschaft mbH**
**Elsenheimerstraße 65**
**80687 München (DE)**

(56) Entgegenhaltungen:
**EP-A2- 0 283 899**

**Beschreibung**

Die vorliegende Erfindung betrifft das Gebiet der optischen Inspektion eines Druckbildes eines Druckobjekts auf einem Substrat. Der Stand der Technik wird durch das Dokument EP 0283899 A2 gebildet.

Zur Beurteilung eines Druckbildes eines Druckobjekts auf einem Substrat, beispielsweise zur Qualitätskontrolle von Druckprozessen, werden typischerweise Systeme zur optischen Inspektion eingesetzt. Derartige Systeme erfassen und verarbeiten optische Druckobjektbilder üblicherweise bei mittlerer Auflösung und erlauben lediglich eine einfache Beurteilung des Druckbildes des Druckobjekts auf dem Substrat.

Bei einer Vielzahl von Druckprozessen erweist sich die Beurteilung des Druckobjektbildes eines Druckobjekts jedoch als schwierig, da der Übergang zwischen verschiedenen Qualitätsklassen, beispielsweise zwischen der Qualitätsklasse "Gut" zu der Qualitätsklasse "Ausschuss", bei Druckerzeugnissen häufig fließend ist. Verschiedene Ausprägungen und Häufigkeit von Druckfehlern, beispielsweise durch zu viel oder zu wenig Farbauftrag, führen dabei häufig zu verschiedenen Qualitätsklassen, die je nach Ausprägung und Häufigkeit auf dem gesamten Substrat zu unterschiedlichen Verwendungsentscheidungen führen können. Es ist daher eine Aufgabe der vorliegenden Erfindung, ein effizientes Konzept zur optischen Inspektion eines Druckbildes eines Druckobjekts auf einem Substrat zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe durch die Anwendung einer logistischen Regression gelöst werden kann, wobei ein Soll-Druckobjekt verwendet wird, welches ein eindeutiges Druckbild repräsentiert, welches hinsichtlich seiner Ausprägung überprüft werden soll, und einer Mehrzahl von Bildregionen, welche geometrisch einem erfassten Druckobjektbild zugeordnet sind. Dem Soll-Druckobjekt kann dabei ein Prior und der Mehrzahl von Bildregion jeweils ein Likelihood im Sinne einer bayesschen Statistik zugeordnet sein. Die Bildregionen können jeweils einem Innenbereich, einem Außenbereich bzw. einem Übergangsbereich zugeordnet sein, wobei in dem Innenbereich eine Färbung vorgesehen ist, wobei in dem Außenbereich keine Färbung vorgesehen ist, und wobei der Übergangsbereich eine Färbung in Abhängigkeit von der Druckqualität bzw. der Druckschärfe aufweist. Zur optischen Inspektion des Druckbildes können auf dieser Basis ein Unterfärbungsmaß und ein Überfärbungsmaß bestimmt werden, wobei das Unterfärbungsmaß eine Wahrscheinlichkeit einer Unterfärbung des Druckobjekts repräsentiert, und wobei das Überfärbungsmaß eine Wahrscheinlichkeit einer Überfärbung des Druckobjekts repräsentiert. Ein Quotient zwischen dem Unterfärbungsmaß und dem Überfärbungsmaß kann als Druckqualitätsindikator zur optischen Inspektion des Druckbildes eingesetzt werden. Die Inspektion des Druckbildes kann entsprechend parallelisiert für weitere Druckobjekte durchgeführt werden. Die Inspektion des Druckbildes kann insbesondere parallelisiert und ortsaufgelöst für verschiedene Bereiche des Druckobjektbildes bzw. Substrats, und parallelisiert für verschiedene Farbkanäle des Druckobjektbildes durchgeführt werden.

Das Konzept erlaubt folglich eine Einteilung eines Druckergebnisses in verschiedene Qualitätsklassen. Je nach verwendeter Drucktechnik, beispielsweise Inkjet-Druck, Laser-Druck oder Offset-Druck, sowie verwendetem Druckdesign, beispielsweise Größe, Farbe oder Papierart, können die zugehörigen Qualitätsklassen speziell ausgeprägt sein und können je nach Verwendung unterschiedlich klassifiziert werden. Das Konzept ermöglicht ferner eine flexible und einfach zu trainierende Einordnung bezüglich der Qualitätsklassen unter Berücksichtigung einer Überfärbung, einer Unterfärbung sowie einer Verschmutzung während des Druckprozesses. Zudem erlaubt das Konzept eine optische Inspektion eines Druckbildes eines beliebigen Druckobjekts, beispielsweise eines alphanummerischen Zeichens oder einer Grafik, auf einem beliebigen Substrat, beispielsweise einem Papiersubstrat oder einem Kunststoffsubstrat. Beispielsweise können personalisierte Dokumente, wie beispielsweise Personalausweise oder Reisepässe, oder Wertdokumente, wie beispielsweise Banknoten, hinsichtlich ihrer Druckqualität klassifiziert werden.

Gemäß einem ersten Aspekt betrifft die Erfindung eine Druckinspektionsvorrichtung zur optischen Inspektion eines Druckbildes eines Druckobjekts, wobei das Druckobjekt auf einem Substrat aufgedruckt ist, und wobei dem Druckobjekt ein Soll-Druckobjekt zugeordnet ist. Die Druckinspektionsvorrichtung umfasst eine Bildkamera, welche ausgebildet ist, das Druckobjekt auf dem Substrat optisch aufzunehmen, um ein Druckobjektbild zu erhalten. Die Druckinspektionsvorrichtung umfasst ferner einen Prozessor, welcher ausgebildet ist, das Druckobjektbild auf der Basis des Soll-Druckobjekts in Bildregionen zu segmentieren, für eine erste Bildregion einen ersten Färbungsgrad zu bestimmen, wobei der erste Färbungsgrad einen Anteil einer Färbung innerhalb der ersten Bildregion anzeigt, für eine zweite Bildregion einen zweiten Färbungsgrad zu bestimmen, wobei der zweite Färbungsgrad einen Anteil einer Färbung innerhalb der zweiten Bildregion anzeigt, für eine dritte Bildregion einen dritten Färbungsgrad zu bestimmen, wobei der dritte Färbungsgrad einen Anteil einer Färbung innerhalb der dritten Bildregion anzeigt, ein Unterfärbungsmaß für das Druckobjekt unter Verwendung des ersten Färbungsgrades, des zweiten Färbungsgrades und des dritten Färbungsgrades zu bestimmen, wobei das Unterfärbungsmaß eine Wahrscheinlichkeit einer Unterfärbung des Druckobjekts auf dem Substrat repräsentiert, ein Überfärbungsmaß für das Druckobjekt unter Verwendung des ersten Färbungsgrades, des zweiten Färbungsgrades und des dritten Färbungsgrades zu bestimmen, wobei das Überfärbungsmaß eine Wahrscheinlichkeit einer Überfärbung des Druckobjekts auf dem Substrat repräsentiert, einen Quotienten zwischen dem Unterfärbungsmaß und dem Überfärbungsmaß zu bestimmen, um einen Druckqualitätsindikator zu erhalten, und den Druckqualitätsindikator mit einem vorbestimmten Schwellenwert zu vergleichen, um das Druckbild des Druckobjekts optisch zu inspizieren. Dadurch wird der Vorteil erreicht, dass das Druckbild des Druckobjekts in eine von zumindest zwei Qualitätsklassen eingeteilt werden kann.

Das Druckobjekt bildet folglich ein zu inspizierendes Ist-Druckobjekt, welches auf dem Substrat aufgedruckt ist. Das Soll-Druckobjekt kann beispielsweise als Vektorfont oder als Vektorgrafik vorliegen, und kann beispielsweise aus einer Druckvorstufe vorbekannt sein. Der jeweilige Färbungsgrad der jeweiligen Bildregion kann beispielsweise als prozentualer Anteil angegeben werden.

Durch die Segmentierung des Druckobjektbildes können jeweils zusammenhängende Bildregionen bestimmt werden, wobei beispielsweise benachbarte Pixel des Druckobjektbildes entsprechend einem vorbestimmten Homogenitätskriterium zu jeweils einer Bildregion zusammengefasst werden können.

Gemäß einer Ausführungsform ist die erste Bildregion einem Innenbereich des Soll-Druckobjekts zugeordnet, wobei die zweite Bildregion einem Außenbereich des Soll-Druckobjekts zugeordnet ist, und wobei die dritte Bildregion einem Übergangsbereich zwischen dem Innenbereich des Soll-Druckobjekts und dem Außenbereich des Soll-Druckobjekts zugeordnet ist. Dadurch wird der Vorteil erreicht, dass die jeweiligen Bildregionen verschiedenen disjunkten Bereichen des Druckobjekts bzw. Soll-Druckobjekts zugeordnet werden können.

Der Innenbereich, der Außenbereich und der Übergangsbereich können beispielsweise unter Verwendung einer entsprechenden Maskierungsschablone bestimmt werden. In dem Innenbereich ist eine Färbung des Druckobjekts vorgesehen, in dem Außenbereich ist keine Färbung des Druckobjekts vorgesehen, und der Übergangsbereich weist eine Färbung in Abhängigkeit von der Druckqualität bzw. Druckschärfe auf.

Gemäß einer Ausführungsform ist der Prozessor ausgebildet, eine Dilatation der ersten Bildregion durchzuführen, um die dritte Bildregion zu erhalten. Dadurch wird der Vorteil erreicht, dass die dritte Bildregion effizient bestimmt werden kann.

Gemäß einer Ausführungsform ist der Prozessor ausgebildet, eine Erosion der zweiten Bildregion durchzuführen, um die dritte Bildregion zu erhalten. Dadurch wird der Vorteil erreicht, dass die dritte Bildregion effizient bestimmt werden kann.

Die Dilatation bzw. die Erosion kann unter Verwendung eines vorbestimmten Radius, beispielsweise 1, 2, 3, 4 oder 5 Pixel, durchgeführt werden.

Gemäß einer Ausführungsform ist der Prozessor ausgebildet, eine erste Größe der ersten Bildregion zu bestimmen , eine zweite Größe der zweiten Bildregion zu bestimmen, eine dritte Größe der dritten Bildregion zu bestimmen, das Unterfärbungsmaß für das Druckobjekt ferner unter Verwendung der ersten Größe, der zweiten Größe und der dritten Größe zu bestimmen, und das Überfärbungsmaß für das Druckobjekt ferner unter Verwendung der ersten Größe, der zweiten Größe und der dritten Größe zu bestimmen. Dadurch wird der Vorteil erreicht, dass unterschiedlich große Bildregionen bei der Bestimmung des Unterfärbungsmaßes bzw. Überfärbungsmaßes in Abhängigkeit von der jeweiligen Größe unterschiedlich gewichtet werden können. Ferner können grundlegende Eigenschaften des Druckprozesses bei der Inspektion des Druckbildes des Druckobjekts, beispielsweise Inkjet versus Intaglio, berücksichtigt werden.

Gemäß einer Ausführungsform ist dem Soll-Druckobjekt zumindest eine Wahrscheinlichkeitsverteilung zugeordnet, wobei die zumindest eine Wahrscheinlichkeitsverteilung eine Wahrscheinlichkeit einer Unterfärbung oder einer Überfärbung einer Bildregion anzeigt, und wobei der Prozessor ausgebildet ist, das Unterfärbungsmaß oder das Überfärbungsmaß ferner unter Verwendung der zumindest einen Wahrscheinlichkeitsverteilung zu bestimmen. Dadurch wird der Vorteil erreicht, dass Wahrscheinlichkeitsverteilungen gemäß einem statistischen Modell, beispielsweise einer bayesschen Statistik, eingesetzt werden können.

Das zugrundeliegende Training kann der Druckinspektion vorgelagert sein und dient der Bestimmung der statistischen Modellparameter, insbesondere der Wahrscheinlichkeitsverteilungen, auf deren Grundlage die Druckinspektion erfolgt. Das zugrundeliegende Training kann beispielsweise auf der Basis einer logistischen Regression erfolgen. Die zumindest eine Wahrscheinlichkeitsverteilung kann durch eine Aktivierungsfunktion repräsentiert sein. Die zumindest eine Wahrscheinlichkeitsverteilung kann durch eine Sigmoidfunktion charakterisiert sein.

Die zumindest eine Wahrscheinlichkeitsverteilung kann eine Wahrscheinlichkeit einer Unterfärbung einer Bildregion anzeigen, wobei der Prozessor ausgebildet ist, das Unterfärbungsmaß ferner unter Verwendung der zumindest einen Wahrscheinlichkeitsverteilung zu bestimmen. Ferner kann die zumindest eine Wahrscheinlichkeitsverteilung eine Wahrscheinlichkeit einer Überfärbung einer Bildregion anzeigen, wobei der Prozessor ausgebildet ist, das Überfärbungsmaß ferner unter Verwendung der zumindest einen Wahrscheinlichkeitsverteilung zu bestimmen.

Gemäß einer Ausführungsform umfasst die Druckinspektionsvorrichtung eine Kommunikationsschnittstelle, welche ausgebildet ist, mit einer Datenbank über ein Kommunikationsnetzwerk zu kommunizieren, und die zumindest eine Wahrscheinlichkeitsverteilung aus der Datenbank abzurufen. Dadurch wird der Vorteil erreicht, dass das zugrundeliegende statistische Modell zentral durch die Datenbank bereitgestellt und einfach aktualisiert werden kann.

Die Kommunikationsschnittstelle kann ferner zugehörige Modellparameter des zugrundeliegenden statistischen Modells aus der Datenbank abrufen.

Gemäß einer Ausführungsform ist der Prozessor ausgebildet, das Unterfärbungsmaß als Produkt einer Mehrzahl von Teilunterfärbungsmaßen zu bestimmen, wobei jedes Teilunterfärbungsmaß jeweils einer Bildregion zugeordnet ist, und wobei der Prozessor ausgebildet ist, das Überfärbungsmaß als Produkt einer Mehrzahl von Teilüberfärbungsmaßen zu bestimmen, wobei jedes Teilüberfärbungsmaß jeweils einer Bildregion zugeordnet ist. Dadurch wird der Vorteil erreicht, dass das Unterfärbungsmaß und das Überfärbungsmaß effizient bestimmt werden können. Beispielsweise können die jeweiligen Teilunterfärbungsmaße bzw. Teilüberfärbungsmaße für die jeweiligen Bildregionen parallel bzw. gleichzeitig bestimmt werden.

Gemäß einer Ausführungsform ist der Prozessor ausgebildet, eine optische Erkennung des Druckobjekts auf der Basis des Druckobjektbildes durchzuführen, um einen Druckobjektindikator zu erhalten, und das Soll-Druckobjekt aus einer Mehrzahl von Soll-Druckobjekten auf der Basis des Druckobjektindikators auszuwählen. Dadurch wird der Vorteil erreicht, dass eine automatische Auswahl des Soll-Druckobjekts aus einer Mehrzahl von Soll-Druckobjekt im Sinne einer optischen Zeichenerkennung (Optical Character Recognition, OCR) realisiert werden kann. Die Mehrzahl von Soll-Druckobjekten kann beispielsweise aus einer Druckvorstufe vorbekannt sein.

Gemäß einer Ausführungsform ist der Prozessor ausgebildet, den Druckqualitätsindikator mit einem weiteren vorbestimmten Schwellenwert zu vergleichen, um das Druckbild des Druckobjekts optisch zu inspizieren. Dadurch wird der Vorteil erreicht, dass das Druckbild des Druckobjekts in eine von zumindest drei Qualitätsklassen eingeteilt werden kann.

Gemäß einer Ausführungsform ist die Bildkamera ausgebildet, das Druckobjektbild als Schwarzweißbild, als Farbbild, als Graustufenbild oder als Mehrkanalbild bereitzustellen, wobei der Prozessor ausgebildet ist, das Druckobjektbild zu binarisieren. Dadurch wird der Vorteil erreicht, dass der jeweilige Färbungsgrad der jeweiligen Bildregion effizient bestimmt werden kann.

Die Binarisierung erfolgt beispielsweise durch einen Vergleich der Farbwerte der Pixel des Druckobjektbildes mit zumindest einem Binarisierungsschwellenwert. Durch die Binarisierung wird folglich das Druckobjektbild, welches als Schwarzweißbild, als Farbbild, als Graustufenbild oder als Mehrkanalbild mit parallelen Farbkanälen vorliegen kann, in ein Binärbild konvertiert. Die Pixel des Binärbildes können hierbei anzeigen, ob ein Farbauftrag an den jeweiligen Stellen der Pixel vorhanden ist oder nicht vorhanden ist. Es können ferner mehrere verschiedene Binarisierungsschwellenwerte verwendet werden, wobei durch eine geeignete Veränderung bzw. Auswahl des Binarisierungsschwellenwertes Verunreinigungen im Druckobjektbild effizienter identifiziert und unterdrückt werden können. Die Inspektion des Druckbildes kann parallelisiert für verschiedene Binarisierungsschwellenwerte erfolgen.

Gemäß einer Ausführungsform ist der Prozessor ausgebildet, eine Ausrichtung des Druckobjekts relativ zu dem Soll-Druckobjekt zu bestimmen, und das Druckobjektbild auf der Basis der Ausrichtung zu drehen. Dadurch wird der Vorteil erreicht, dass eine Ausrichtung des Druckobjekts bezüglich des Soll-Druckobjekts bzw. der Maskierungsschablone korrigiert werden kann.

Der Prozessor kann ausgebildet sein, den zugehörigen Drehwinkel zu bestimmen. Der zugehörige Drehwinkel kann jedoch auch vorbestimmt sein.

Gemäß einer Ausführungsform ist der Prozessor ausgebildet, ein Größenverhältnis des Druckobjekts relativ zu dem Soll-Druckobjekt zu bestimmen, und das Druckobjektbild auf der Basis des Größenverhältnisses zu skalieren. Dadurch wird der Vorteil erreicht, dass ein Größenverhältnis des Druckobjekts bezüglich des Soll-Druckobjekts bzw. der Maskierungsschablone korrigiert werden kann.

Der Prozessor kann ausgebildet sein, den zugehörigen Skalierungsfaktor zu bestimmen. Der zugehörige Skalierungsfaktor kann jedoch auch vorbestimmt sein.

Gemäß einer Ausführungsform umfasst das Druckobjekt und das Soll-Druckobjekt jeweils ein alphanummerisches Zeichen. Dadurch wird der Vorteil erreicht, dass verschiedene Arten von Druckobjekten bzw. Soll-Druckobjekten verwendet werden können. Das alphanummerische Zeichen kann beispielsweise ein Buchstabe, eine Ziffer oder ein Sonderzeichen sein.

Gemäß einer Ausführungsform umfasst das Druckobjekt und das Soll-Druckobjekt jeweils eine Grafik. Dadurch wird der Vorteil erreicht, dass verschiedene Arten von Druckobjekten bzw. Soll-Druckobjekten verwendet werden können. Die Grafik kann eine beliebige zweidimensionale Form oder Linienführung aufweisen. Die Grafik kann beispielsweise eine Guilloche sein.

Gemäß einer Ausführungsform ist das Substrat ein Papiersubstrat oder ein Kunststoffsubstrat. Dadurch wird der Vorteil erreicht, dass verschiedene Arten von Substraten verwendet werden können.

Gemäß einem zweiten Aspekt betrifft die Erfindung ein System zur optischen Inspektion eines Druckbildes eines Druckobjekts. Das System umfasst eine Druckinspektionsvorrichtung gemäß dem ersten Aspekt der Erfindung, und eine Datenbank, in welcher zumindest eine Wahrscheinlichkeitsverteilung gespeichert ist, wobei die zumindest eine Wahrscheinlichkeitsverteilung eine Wahrscheinlichkeit einer Unterfärbung oder einer Überfärbung einer Bildregion anzeigt. Dadurch wird der Vorteil erreicht, dass ein zugrundeliegendes statistisches Modell zentral durch die Datenbank bereitgestellt und einfach aktualisiert werden kann.

In der Datenbank können ferner zugehörige Modellparameter des zugrundeliegenden statistischen Modells abgelegt sein.

Gemäß einem dritten Aspekt betrifft die Erfindung ein Verfahren zur optischen Inspektion eines Druckbildes eines Druckobjekts unter Verwendung einer Druckinspektionsvorrichtung, wobei das Druckobjekt auf einem Substrat aufgedruckt ist, wobei dem Druckobjekt ein Soll-Druckobjekt zugeordnet ist, und wobei die Druckinspektionsvorrichtung eine Bildkamera und einen Prozessor umfasst. Das Verfahren umfasst ein optisches Aufnehmen des Druckobjekts auf dem Substrat durch die Bildkamera, um ein Druckobjektbild zu erhalten, ein Segmentieren des Druckobjektbildes auf der Basis des Soll-Druckobjekts in Bildregionen durch den Prozessor, ein Bestimmen eines ersten Färbungsgrades für eine erste Bildregion durch den Prozessor, wobei der erste Färbungsgrad einen Anteil einer Färbung innerhalb der ersten Bildregion anzeigt, ein Bestimmen eines zweiten Färbungsgrades für eine zweite Bildregion durch den Prozessor, wobei der zweite Färbungsgrad einen Anteil einer Färbung innerhalb der zweiten Bildregion anzeigt, ein Bestimmen eines dritten Färbungsgrades für eine dritte Bildregion durch den Prozessor, wobei der dritte Färbungsgrad einen Anteil einer Färbung innerhalb der dritten Bildregion anzeigt, ein Bestimmen eines Unterfärbungsmaßes für das Druckobjekt unter Verwendung des ersten Färbungsgrades, des zweiten Färbungsgrades und des dritten Färbungsgrades durch den Prozessor, wobei das Unterfärbungsmaß eine Wahrscheinlichkeit einer Unterfärbung des Druckobjekts auf dem Substrat repräsentiert, ein Bestimmen eines Überfärbungsmaßes für das Druckobjekt unter Verwendung des ersten Färbungsgrades, des zweiten Färbungsgrades und des dritten Färbungsgrades durch den Prozessor, wobei das Überfärbungsmaß eine Wahrscheinlichkeit einer Überfärbung des Druckobjekts auf dem Substrat repräsentiert, ein Bestimmen eines Quotienten zwischen dem Unterfärbungsmaß und dem Überfärbungsmaß durch den Prozessor, um einen Druckqualitätsindikator zu erhalten, und ein Vergleichen des Druckqualitätsindikators mit einem vorbestimmten Schwellenwert durch den Prozessor, um das Druckbild des Druckobjekts optisch zu inspizieren. Dadurch wird der Vorteil erreicht, dass das Druckbild des Druckobjekts in eine von zumindest zwei Qualitätsklassen eingeteilt werden kann.

Das Verfahren kann durch die Druckinspektionsvorrichtung ausgeführt werden. Weitere Merkmale des Verfahrens resultieren unmittelbar aus den Merkmalen bzw. der Funktionalität der Druckinspektionsvorrichtung.

Gemäß einem vierten Aspekt betrifft die Erfindung ein Computerprogramm mit einem Programmcode zum Ausführen des Verfahrens gemäß dem dritten Aspekt der Erfindung. Dadurch wird der Vorteil erreicht, dass das Verfahren automatisiert ausgeführt werden kann.

Die Druckinspektionsvorrichtung kann programmtechnisch eingerichtet sein, um den Programmcode oder Teile des Programmcodes auszuführen.

Die Erfindung kann in Hardware und Software realisiert werden.

Weitere Ausführungsbeispiele werden Bezug nehmend auf die beiliegenden Zeichnungen näher erläutert. Es zeigen:

Fig. 1 ein schematisches Diagramm einer Druckinspektionsvorrichtung zur optischen Inspektion eines Druckbildes eines Druckobjekts;

Fig. 2 ein schematisches Diagramm eines Systems zur optischen Inspektion eines Druckbildes eines Druckobjekts;

Fig. 3 ein schematisches Diagramm eines Verfahrens zur optischen Inspektion eines Druckbildes eines Druckobjekts;

Fig. 4 ein schematisches Diagramm eines Verfahrens zur optischen Inspektion eines Druckbildes eines Druckobjekts;

Fig. 5 ein schematisches Diagramm eines Verfahrens zur optischen Inspektion eines Druckbildes eines Druckobjekts;

Fig. 6 ein schematisches Diagramm von Prior-Wahrscheinlichkeiten für Anwendungen bei der optischen Zeichenerkennung sowie der optischen Zeichenverifikation;

Fig. 7 ein schematisches Diagramm einer Segmentierung eines idealisierten Druckobjektbildes in Bildregionen;

Fig. 8 ein schematisches Diagramm einer Bestimmung von Färbungsgraden in Bildregionen eines idealisierten Druckobjektbildes;

Fig. 9 ein schematisches Diagramm einer Bestimmung von Färbungsgraden in Bildregionen eines realen Druckobjektbildes;

Fig. 10 ein schematisches Diagramm einer Bestimmung von Färbungsgraden in Bildregionen eines realen Druckobjektbildes;

Fig. 11    schematische Diagramme von Wahrscheinlichkeitsverteilungen einer Unterfärbung und einer Überfärbung einer Bildregion;

Fig. 12    schematische Diagramme von Wahrscheinlichkeitsverteilungen einer Unterfärbung und einer Überfärbung einer Bildregion;

Fig. 13    ein schematisches Diagramm einer Bestimmung eines Unterfärbungsmaßes und eines Überfärbungsmaßes;

Fig. 14    ein schematisches Diagramm einer Bestimmung eines Unterfärbungsmaßes und eines Überfärbungsmaßes;

Fig. 15    ein schematisches Diagramm einer statistischen Auswertung einer Vielzahl von Druckobjektbildern; und

Fig. 16    ein schematisches Diagramm einer statistischen Auswertung einer Vielzahl von Druckobjektbildern.

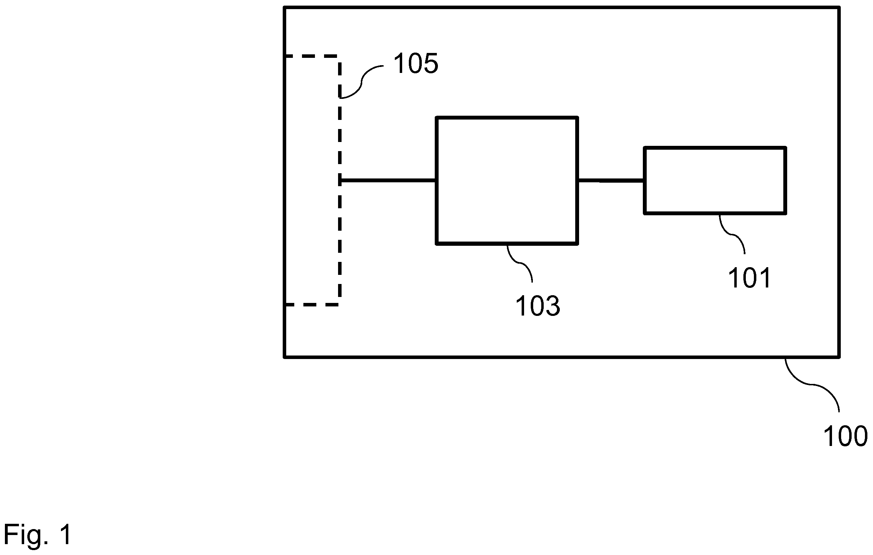

Fig. 1 zeigt ein schematisches Diagramm einer Druckinspektionsvorrichtung 100 zur optischen Inspektion eines Druckbildes eines Druckobjekts, wobei das Druckobjekt auf einem Substrat aufgedruckt ist, und wobei dem Druckobjekt ein Soll-Druckobjekt zugeordnet ist. Die Druckinspektionsvorrichtung 100 umfasst eine Bildkamera 101, welche ausgebildet ist, das Druckobjekt auf dem Substrat optisch aufzunehmen, um ein Druckobjektbild zu erhalten. Die Druckinspektionsvorrichtung 100 umfasst ferner einen Prozessor 103, welcher ausgebildet ist, das Druckobjektbild auf der Basis des Soll-Druckobjekts in Bildregionen zu segmentieren, für eine erste Bildregion einen ersten Färbungsgrad zu bestimmen, wobei der erste Färbungsgrad einen Anteil einer Färbung innerhalb der ersten Bildregion anzeigt, für eine zweite Bildregion einen zweiten Färbungsgrad zu bestimmen, wobei der zweite Färbungsgrad einen Anteil einer Färbung innerhalb der zweiten Bildregion anzeigt, für eine dritte Bildregion einen dritten Färbungsgrad zu bestimmen, wobei der dritte Färbungsgrad einen Anteil einer Färbung innerhalb der dritten Bildregion anzeigt, ein Unterfärbungsmaß für das Druckobjekt unter Verwendung des ersten Färbungsgrades, des zweiten Färbungsgrades und des dritten Färbungsgrades zu bestimmen, wobei das Unterfärbungsmaß eine Wahrscheinlichkeit einer Unterfärbung des Druckobjekts auf dem Substrat repräsentiert, ein Überfärbungsmaß für das Druckobjekt unter Verwendung des ersten Färbungsgrades, des zweiten Färbungsgrades und des dritten Färbungsgrades zu bestimmen, wobei das Überfärbungsmaß eine Wahrscheinlichkeit einer Überfärbung des Druckobjekts auf dem Substrat repräsentiert, einen Quotienten zwischen dem Unterfärbungsmaß und dem Überfärbungsmaß zu bestimmen, um einen Druckqualitätsindikator zu erhalten, und den Druckqualitätsindikator mit einem vorbestimmten Schwellenwert zu vergleichen, um das Druckbild des Druckobjekts optisch zu inspizieren.

Dem Soll-Druckobjekt kann zumindest eine Wahrscheinlichkeitsverteilung zugeordnet sein, wobei die zumindest eine Wahrscheinlichkeitsverteilung eine Wahrscheinlichkeit einer Unterfärbung oder einer Überfärbung einer Bildregion anzeigt. Der Prozessor 103 kann ausgebildet sein, das Unterfärbungsmaß oder das Überfärbungsmaß ferner unter Verwendung der zumindest einen Wahrscheinlichkeitsverteilung zu bestimmen.

Die Druckinspektionsvorrichtung 100 kann ferner eine Kommunikationsschnittstelle 105 umfassen, welche ausgebildet ist, mit einer Datenbank über ein Kommunikationsnetzwerk zu kommunizieren, und die zumindest eine Wahrscheinlichkeitsverteilung aus der Datenbank abzurufen.

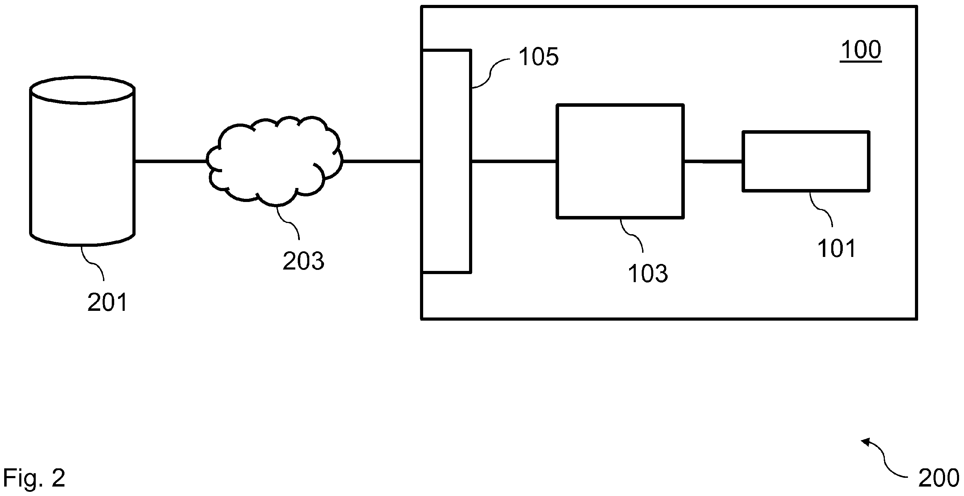

Fig. 2 zeigt ein schematisches Diagramm eines Systems 200 zur optischen Inspektion eines Druckbildes eines Druckobjekts, wobei das Druckobjekt auf einem Substrat aufgedruckt ist, und wobei dem Druckobjekt ein Soll-Druckobjekt zugeordnet ist. Das System 200 umfasst eine Druckinspektionsvorrichtung 100 und eine Datenbank 201. Die Druckinspektionsvorrichtung 100 umfasst eine Bildkamera 101, welche ausgebildet ist, das Druckobjekt auf dem Substrat optisch aufzunehmen, um ein Druckobjektbild zu erhalten. Die Druckinspektionsvorrichtung 100 umfasst ferner einen Prozessor 103, welcher ausgebildet ist, das Druckobjektbild auf der Basis des Soll-Druckobjekts in Bildregionen zu segmentieren, für eine erste Bildregion einen ersten Färbungsgrad zu bestimmen, wobei der erste Färbungsgrad einen Anteil einer Färbung innerhalb der ersten Bildregion anzeigt, für eine zweite Bildregion einen zweiten Färbungsgrad zu bestimmen, wobei der zweite Färbungsgrad einen Anteil einer Färbung innerhalb der zweiten Bildregion anzeigt, für eine dritte Bildregion einen dritten Färbungsgrad zu bestimmen, wobei der dritte Färbungsgrad einen Anteil einer Färbung innerhalb der dritten Bildregion anzeigt, ein Unterfärbungsmaß für das Druckobjekt unter Verwendung des ersten Färbungsgrades, des zweiten Färbungsgrades und des dritten Färbungsgrades zu bestimmen, wobei das Unterfärbungsmaß eine Wahrscheinlichkeit einer Unterfärbung des Druckobjekts auf dem Substrat repräsentiert, ein Überfärbungsmaß für das Druckobjekt unter Verwendung des ersten Färbungsgrades, des zweiten Färbungsgrades und des dritten Färbungsgrades zu bestimmen, wobei das Überfärbungsmaß eine Wahrscheinlichkeit einer Überfärbung des Druckobjekts auf dem Substrat repräsentiert, einen Quotienten zwischen dem Unterfärbungsmaß und dem Überfärbungsmaß zu bestimmen, um einen Druckqualitätsindikator zu erhalten, und den Druckqualitätsindikator mit einem vorbestimmten Schwellenwert zu vergleichen, um das Druckbild des Druckobjekts optisch zu inspizieren.

Dem Soll-Druckobjekt kann zumindest eine Wahrscheinlichkeitsverteilung zugeordnet sein, wobei die zumindest eine Wahrscheinlichkeitsverteilung eine Wahrscheinlichkeit einer Unterfärbung oder einer Überfärbung einer Bildregion anzeigt. Der Prozessor 103 kann ausgebildet sein, das Unterfärbungsmaß oder das Überfärbungsmaß ferner unter Verwendung der zumindest einen Wahrscheinlichkeitsverteilung zu bestimmen.

Die Druckinspektionsvorrichtung 100 umfasst ferner eine Kommunikationsschnittstelle 105, welche ausgebildet ist, mit der Datenbank 201 über ein Kommunikationsnetzwerk 203 zu kommunizieren. In der Datenbank 201 ist die zumindest eine Wahrscheinlichkeitsverteilung gespeichert. Die Kommunikationsschnittstelle 105 ist ausgebildet, die zumindest eine Wahrscheinlichkeitsverteilung aus der Datenbank 201 über das Kommunikationsnetzwerk 203 abzurufen.

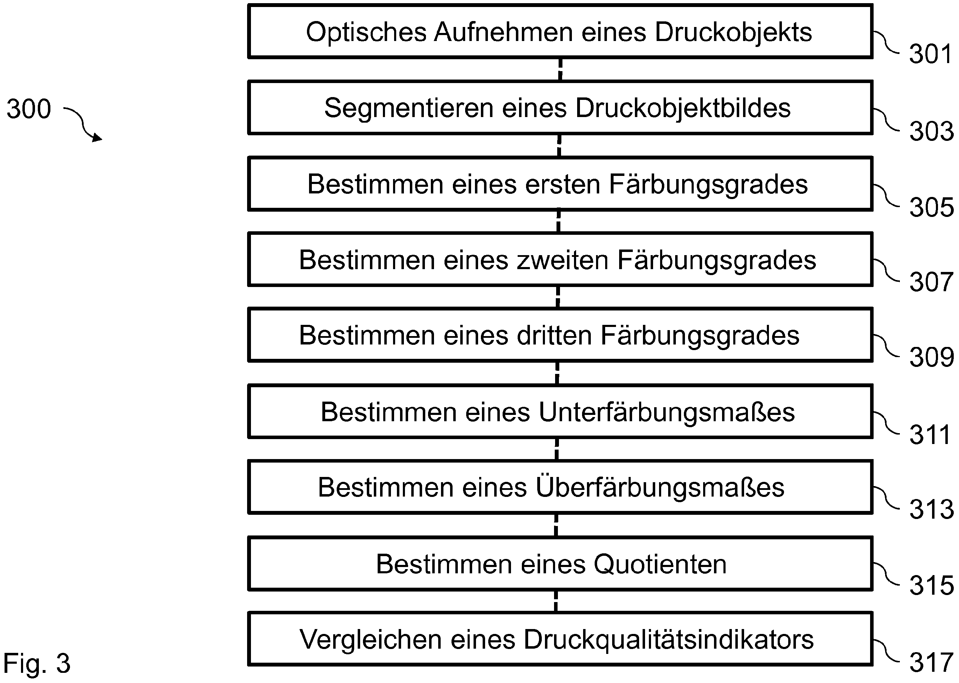

Fig. 3 zeigt ein schematisches Diagramm eines Verfahrens 300 zur optischen Inspektion eines Druckbildes eines Druckobjekts unter Verwendung einer Druckinspektionsvorrichtung, wobei das Druckobjekt auf einem Substrat aufgedruckt ist, wobei dem Druckobjekt ein Soll-Druckobjekt zugeordnet ist, und wobei die Druckinspektionsvorrichtung eine Bildkamera und einen Prozessor umfasst. Das Verfahren 300 umfasst ein optisches Aufnehmen 301 des Druckobjekts auf dem Substrat durch die Bildkamera, um ein Druckobjektbild zu erhalten, ein Segmentieren 303 des Druckobjektbildes auf der Basis des Soll-Druckobjekts in Bildregionen durch den Prozessor, ein Bestimmen 305 eines ersten Färbungsgrades für eine erste Bildregion durch den Prozessor, wobei der erste Färbungsgrad einen Anteil einer Färbung innerhalb der ersten Bildregion anzeigt, ein Bestimmen 307 eines zweiten Färbungsgrades für eine zweite Bildregion durch den Prozessor, wobei der zweite Färbungsgrad einen Anteil einer Färbung innerhalb der zweiten Bildregion anzeigt, ein Bestimmen 309 eines dritten Färbungsgrades für eine dritte Bildregion durch den Prozessor, wobei der dritte Färbungsgrad einen Anteil einer Färbung innerhalb der dritten Bildregion anzeigt, ein Bestimmen 311 eines Unterfärbungsmaßes für das Druckobjekt unter Verwendung des ersten Färbungsgrades, des zweiten Färbungsgrades und des dritten Färbungsgrades durch den Prozessor, wobei das Unterfärbungsmaß eine Wahrscheinlichkeit einer Unterfärbung des Druckobjekts auf dem Substrat repräsentiert, ein Bestimmen 313 eines Überfärbungsmaßes für das Druckobjekt unter Verwendung des ersten Färbungsgrades, des zweiten Färbungsgrades und des dritten Färbungsgrades durch den Prozessor, wobei das Überfärbungsmaß eine Wahrscheinlichkeit einer Überfärbung des Druckobjekts auf dem Substrat repräsentiert, ein Bestimmen 315 eines Quotienten zwischen dem Unterfärbungsmaß und dem Überfärbungsmaß durch den Prozessor, um einen Druckqualitätsindikator zu erhalten, und ein Vergleichen 317 des Druckqualitätsindikators mit einem vorbestimmten Schwellenwert durch den Prozessor, um das Druckbild des Druckobjekts optisch zu inspizieren.

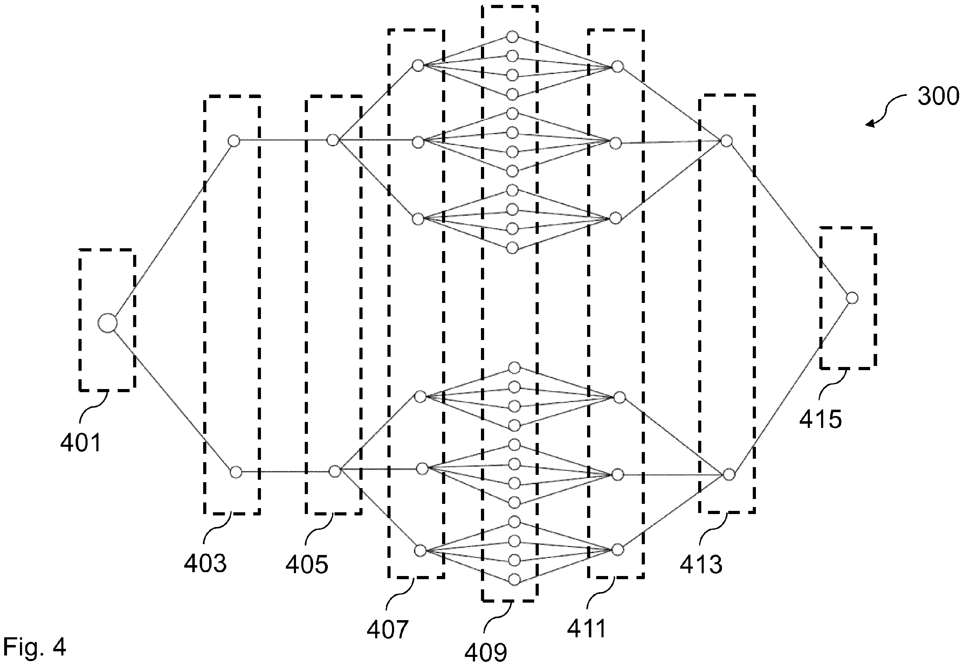

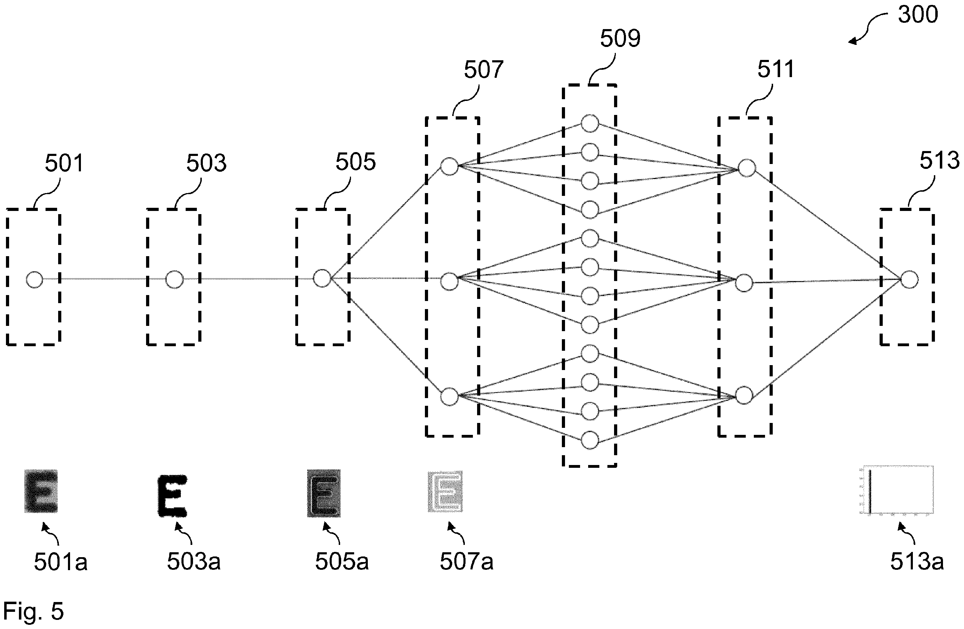

Fig. 4 und Fig. 5 zeigen jeweils ein schematisches Diagramm eines Verfahrens 300 zur optischen Inspektion eines Druckbildes eines Druckobjekts. Das Verfahren 300 kann insbesondere zur graduellen Druckinspektion eingesetzt werden, wobei eine bayessche Statistik verwendet wird. Der Verfahrensablauf erfolgt dabei im Sinne eines Prozesses, welcher parallele Verarbeitungsschichten umfasst. Dabei erfolgt beispielsweise eine Binarisierung bzw. Segmentierung, eine Schablonenbestimmung aus einer trainierten Schablonendatenbank, sowie eine Bestimmung einer Unterfärbung (Under-Inking, UI) bzw. einer Überfärbung (Over-Inking, OI) eines Druckobjekts unter Verwendung einer logistischen Regression.

Beispielsweise kann zunächst ein Soll-Druckobjekt als Solldesign herangezogen werden. Auf der Basis des Soll-Druckobjekts kann eine Maskierungsschablone mit einer inneren und äußeren Kontur erzeugt werden. Durch eine Dilatation oder Erosion kann ein Übergangsbereich bereitgestellt werden. Die Maskierungsschablone kann anschließend mit dem Druckobjektbild in Übereinstimmung gebracht werden, um eine erste Bildregion, eine zweite Bildregion und eine dritte Bildregion zu bestimmen, wobei die erste Bildregion einem Innenbereich des Soll-Druckobjekts zugeordnet ist, wobei die zweite Bildregion einem Außenbereich des Soll-Druckobjekts zugeordnet ist, und wobei die dritte Bildregion dem Übergangsbereich zwischen dem Innenbereich und dem Außenbereich zugeordnet ist.

Für jede Bildregion kann anschließend ein Färbungsgrad bestimmt werden, welcher beispielsweise einen prozentualen Anteil einer Überfärbung bzw. Unterfärbung in der jeweiligen Bildregion repräsentiert. Anschließend erfolgt die Bestimmung eines Unterfärbungsmaßes und eines Überfärbungsmaßes, wobei die Überfärbung und Unterfärbung je nach Qualitätsanforderung beispielsweise mittels einer logistischen Regression klassifiziert werden kann. Folglich wird eine Posterior-Wahrscheinlichkeit für eine Qualitätsklasse herangezogen. Diese Qualitätsklasse kann anschließend einer Qualitätsaussage, beispielsweise "Gut" oder "Schlecht", zugeordnet werden.

Im Einzelnen umfasst das Verfahren 300 in Fig. 4 ein Bereitstellen 401 eines Druckobjektbildes, ein Binarisieren 403 des Druckobjektbildes, ein Durchführen 405 einer Kantenerkennung, ein räumliches Filtern 407, ein Durchführen 409 einer Aktivierung für die Über-/Unterfärbung, ein Bestimmen 411 eines Über-/Unterfärbungsmaßes, ein Schätzen 413 einer Qualitätsklasse, und ein Bestimmen 415 eines Grades. Das Verfahren 300 in Fig. 5 umfasst im Einzelnen ein Bereitstellen 501 eines Druckobjektbildes, um ein bereitgestelltes Druckobjektbild 501a zu erhalten, ein Binarisieren 503 des Druckobjektbildes, um ein binarisiertes Druckobjektbild 503a zu erhalten, ein Ausrichten 505 des Druckobjektbildes, um ein ausgerichtetes Druckobjektbild 505a zu erhalten, ein räumliches Filtern 507 mittels der Maskierungsschablone 507a, ein Durchführen 509 einer Aktivierung für die Über-/Unterfärbung, ein Bestimmen 511 eines Über-/Unterfärbungsmaßes, und ein Bestimmen 513 eines Grades unter Verwendung eines Auswertungsdiagramms 513a.

Das Bereitstellen 501 kann beispielsweise unter Verwendung einer kalibrierten Druckobjektbilderfassung erfolgen. Das räumliche Filtern 507 kann beispielsweise unter Verwendung eines trainierten Modells aus einem Vektorfont, beispielsweise einem TrueType Font, durchgeführt werden.

Das Durchführen 509 der Aktivierung hinsichtlich der Kriterien "Gut" und "Schlecht" kann auf einem Training durch eine logistische Regression einer Trainingsdatenbank basieren. Die Aktivierung kann unter Verwendung von Wahrscheinlichkeitsverteilungen gemäß dem folgenden Zusammenhang durchgeführt werden:

$$P(B{=}p \mid A{=}k) = \frac{1}{1+e^{(p_i - \mu_k)/\sigma}}$$

wobei "k" eine Unterfärbung oder Überfärbung, "i" Schwarz oder Weiß, und $\sigma$ eine Steigungsschätzung repräsentiert.

Das Bestimmen 511 kann ein Bestimmen einer Chance bzw. einer Wahrscheinlichkeit durch einen trainierten Schätzer mittels einer Graddefinition unter Verwendung des folgenden Zusammenhangs umfassen:

$$\frac{P(UI|Black)}{P(OI|White)}$$

wobei P(UI|Black) das Unterfärbungsmaß, und P(OI|White) das Überfärbungsmaß repräsentiert.

Ausführungsformen der Erfindung weisen u.a. den Vorteil auf, dass diese flexibler und/oder unempfindlicher gegenüber äußeren Störungen, beispielsweise beim Abgleich von Druckobjektbildern, sind. Das Verfahren 300 kann in verschiedensten Druckprozessen, bei denen mit einem vorgegebenen visuellen Referenzdesigns bzw. Soll-Druckobjekt gearbeitet wird, eingesetzt werden. Verschiedene Qualitätsausprägungen können dabei in der statistischen Qualitätskontrolle mit produktabhängigen Fehlermerkmalen direkt angelernt und reproduziert werden. Ferner ist das Konzept skalierbar und weist frei festlegbare Qualitätsanforderungen auf. Das Konzept berücksichtigt dabei Toleranzen des Druckprozesses beispielsweise durch die Einführung eines Übergangsbereichs. Dieser kann je nach Anforderung unterschiedlich gewichtet bzw. antrainiert werden.

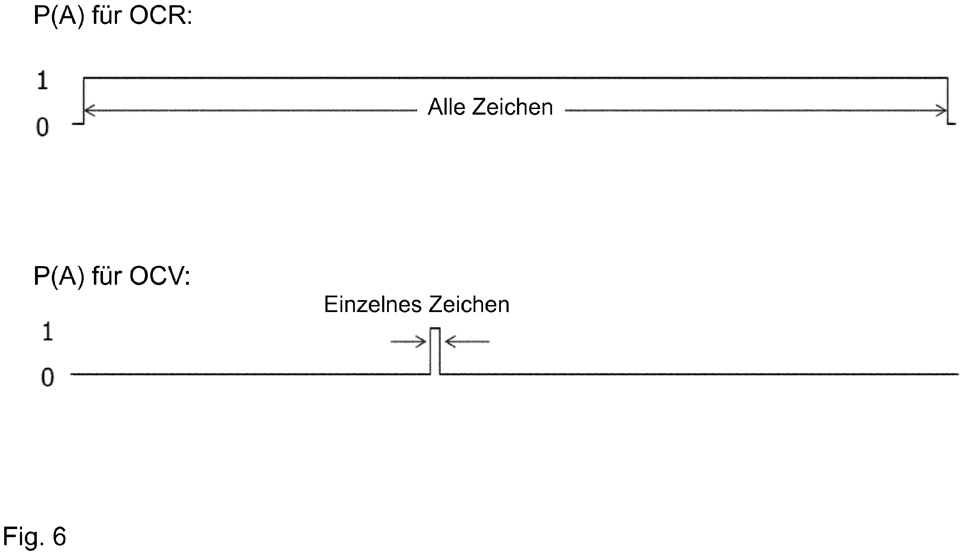

Fig. 6 zeigt ein schematisches Diagramm von Prior-Wahrscheinlichkeiten P(A) für Anwendungen bei der optischen Zeichenerkennung (Optical Character Recognition, OCR) sowie der optischen Zeichenverifikation (Optical Character Verification, OCV). Die Prior-Wahrscheinlichkeiten P(A) sind dabei im Rahmen einer bayesschen Statistik von Bedeutung.

Das bayessche Theorem basiert dabei auf dem folgenden Zusammenhang:

$$P(A|B) = \frac{P(B|A) * P(A)}{P(B)}$$

wobei P(A) eine Prior-Wahrscheinlichkeit, P(B|A) eine Likelihood-Wahrscheinlichkeit, P(B) eine Beobachtungswahrscheinlichkeit, und P(A|B) eine Posterior-Wahrscheinlichkeit repräsentiert.

Die Likelihood-Wahrscheinlichkeit für ein multivariates Gaußsches Modell mit Dimension p eines Merkmalsraumes basiert dabei beispielsweise auf dem folgenden Zusammenhang:

$$P(B = x|A = k) = \frac{1}{(2\pi)^{\frac{p}{2}}|\Sigma_k|^{\frac{1}{2}}} e^{-\frac{1}{2}(x-\mu_k)^T \Sigma^{-\frac{1}{k}}(x-\mu_k)}$$

Dabei bezeichnen $\mu_k$ einen Mittelwert einer Klasse k mittels Anlernen, $\Sigma_k$ eine Kovarianzmatrix einer Klasse k mittels Anlernen, und x Daten einer Klasse k, gemäß:

$$\mu_k = (\mu_{\,k}^{\,1} ... \mu_k^{\,p})$$

$$\Sigma_k = \sum_{i=1}^{N} \frac{(x_i - \mu_k)(x_i - \mu_k)^T}{N-1}$$

$$x_i = (x_i^1 ... x_i^p)$$

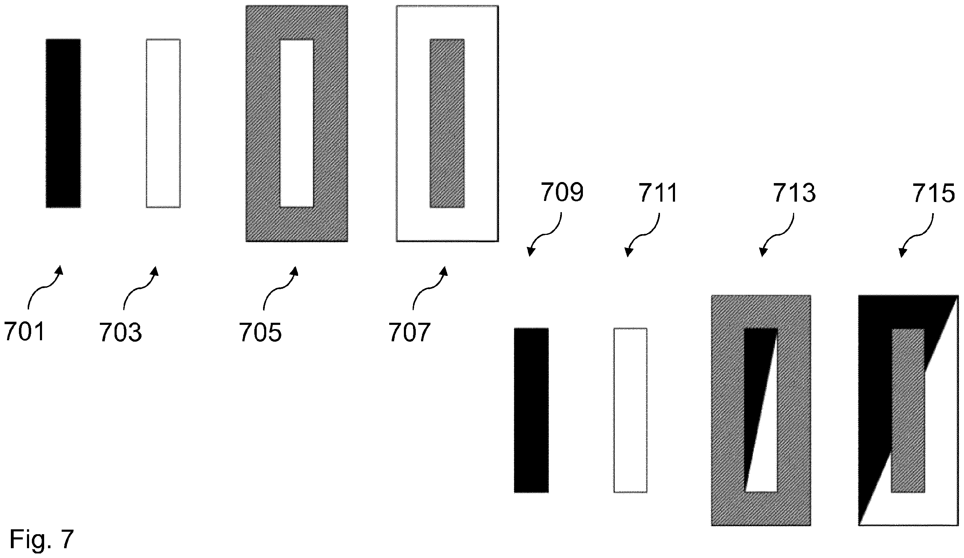

Fig. 7 zeigt ein schematisches Diagramm einer Segmentierung eines idealisierten Druckobjektbildes in Bildregionen. Das idealisierte Druckobjektbild wird dabei in zwei Bildregionen segmentiert, welche einem Innenbereich eines idealisierten Soll-Druckobjekts und einem Außenbereich des idealisierten Soll-Druckobjekts zugeordnet sind. Innerhalb der Bildregionen kann jeweils ein Färbungsgrad bestimmt werden, welcher eine Unterfärbung bzw. eine Überfärbung repräsentiert. Das Diagramm zeigt beispielhaft ein idealisiertes Druckobjektbild 701, eine Kontur 703 des idealisierten Druckbildes 701, eine Suchregion 705 für 100% Unterfärbung, eine Suchregion 707 für 0% Überfärbung, ein idealisiertes Druckobjektbild 709, eine Kontur 711 des idealisierten Druckobjektbildes 709, eine Suchregion 713 für 50% Unterfärbung, und eine Suchregion 715 für 50% Überfärbung.

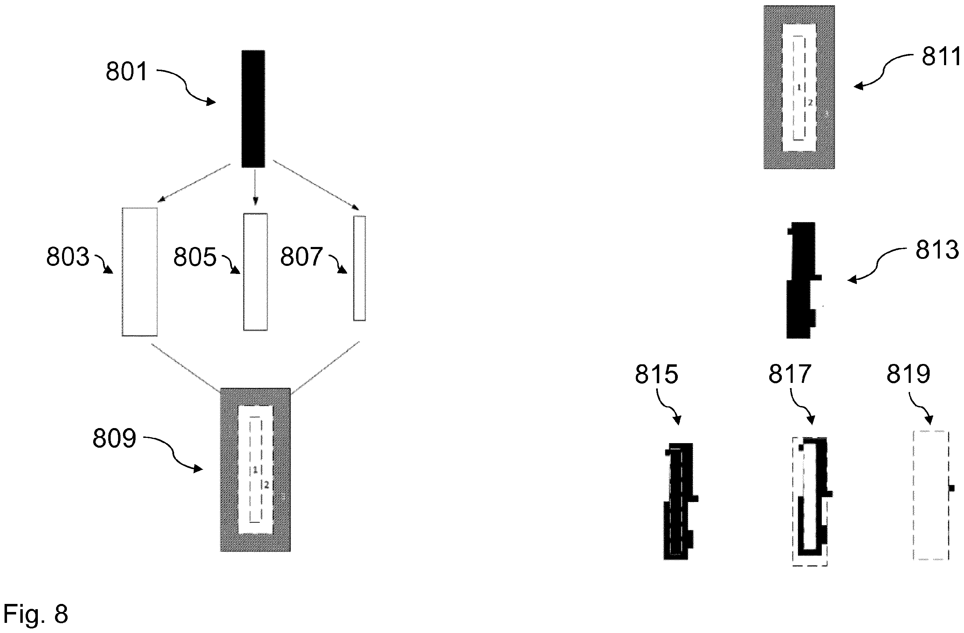

Fig. 8 zeigt ein schematisches Diagramm einer Bestimmung von Färbungsgraden in Bildregionen eines idealisierten Druckobjektbildes. Aufbauend auf der Segmentierung des idealisierten Druckobjektbildes aus Fig. 7 wird hierbei eine dritte Bildregion mittels einer Dilatation bzw. einer Erosion einer der beiden bereits bestimmten Bildregionen durchgeführt. Die dritte Bildregion ist dabei einem Übergangsbereich zwischen dem Innenbereich und dem Außenbereich zugeordnet. Innerhalb der Bildregionen kann jeweils ein Färbungsgrad bestimmt werden, welcher eine Unterfärbung bzw. eine Überfärbung repräsentiert. Das Diagramm illustriert auf der linken Seite einen Anlernschritt und auf der rechten Seite einen Auswertungsschritt. Das Diagramm zeigt ein idealisiertes Druckobjektbild 801, eine Bildregion 803, welche mittels einer Dilatation bestimmt werden kann, eine Bildregion 805, eine Bildregion 807, welche mittels einer Erosion bestimmt werden kann, und eine Maskierungsschablone 809 mit einer inneren Region ("1") betreffend eine Unterfärbung, einer Übergangsregion ("2") zur separaten Auswertung, und einer äußeren Region ("3") betreffend eine Überfärbung. Eine schlechtere Druckqualität kann zu einer größeren Region ("2") führen, wobei ein Radius der Maskierung berücksichtigt werden kann. Das Diagramm zeigt ferner eine Maskierungsschablone 811 als Vorlage, welche der Maskierungsschablone 809 entsprechen kann, ein reales Druckobjektbild 813, eine Bildregion 815 betreffend Region ("1"), welche eine ordnungsgemäße Färbung aufweist, eine Bildregion 817 betreffend Region ("2"), welche unscharf ist und einer Histogramm-Analyse im Sinne einer SPC unterworfen werden kann, und eine Bildregion 819 betreffend Region ("3"), welche 1 Pixel Überfärbung aufweist. Eine hohe Auflösung kann zu kleinen Pixeln und einer kleinen Region ("2") führen.

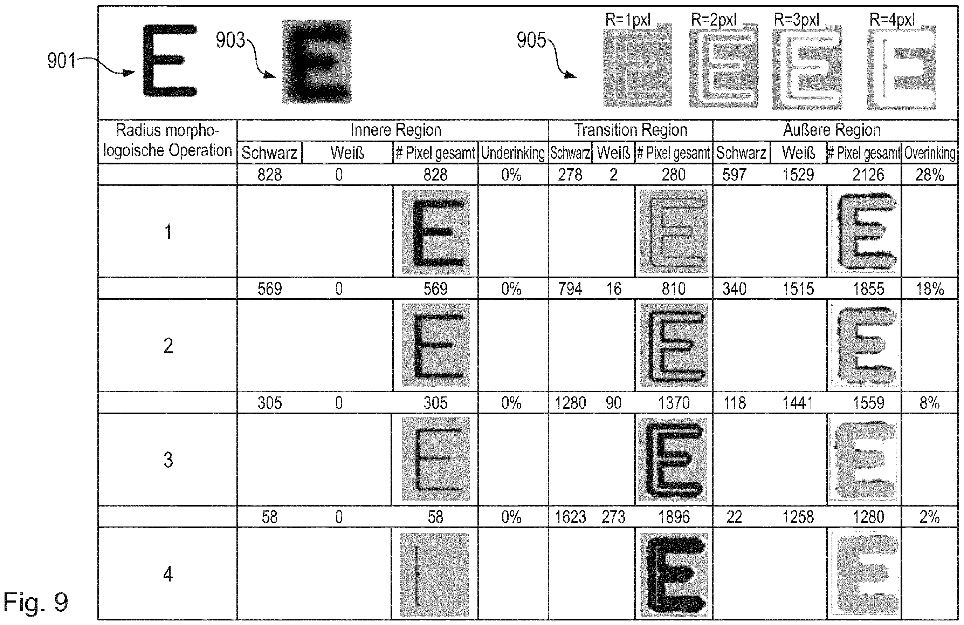

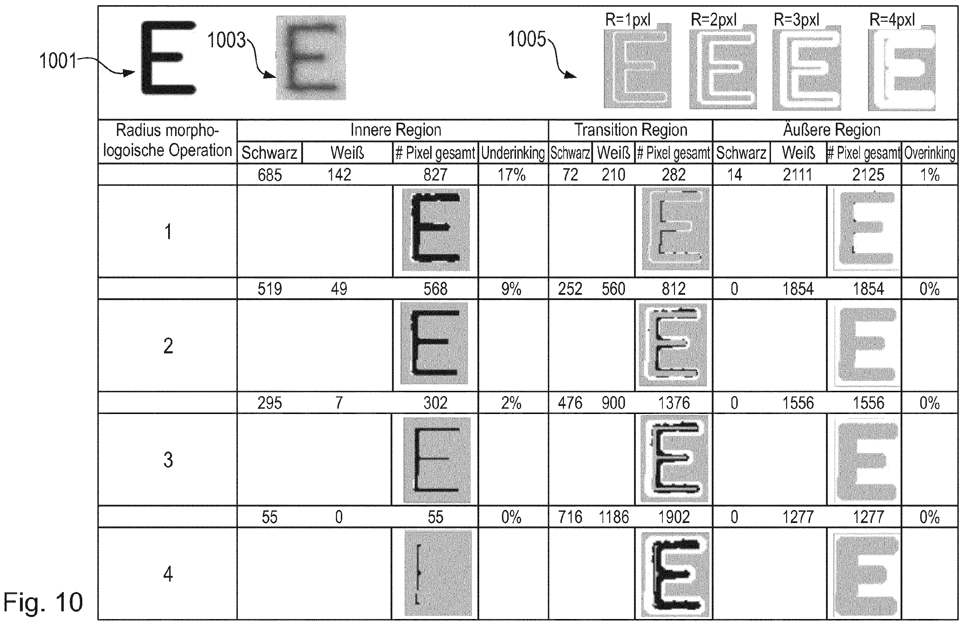

Fig. 9 zeigt ein schematisches Diagramm einer Bestimmung von Färbungsgraden in Bildregionen eines realen Druckobjektbildes 903 auf der Basis eines Soll-Druckobjekts 901 unter Verwendung verschiedener Maskierungsschablonen 905. Fig. 10 zeigt ein weiteres schematisches Diagramm einer Bestimmung von Färbungsgraden in Bildregionen eines realen Druckobjektbildes 1003 auf der Basis eines Soll-Druckobjektes 1001 unter Verwendung verschiedener Maskierungsschablonen 1005.

Das reale Druckobjektbild 903 zeigt exemplarisch den Buchstaben "E" als Druckobjekt, wobei das Druckobjekt auf dem Substrat in diesem Diagramm überfärbt ist. Das reale Druckobjektbild 1003 zeigt ebenfalls exemplarisch den Buchstaben "E" als Druckobjekt, wobei das Druckobjekt auf dem Substrat in diesem Diagramm unterfärbt ist.

Bei der Segmentierung wurden dabei drei Bildregionen bestimmt, wobei eine erste Bildregion einem Innenbereich ("Innere Region") des Soll-Druckobjekts 901 bzw. 1001 zugeordnet ist, wobei eine zweite Bildregion einem Außenbereich ("Äußere Region") des Soll-Druckobjekts 901 bzw. 1001 zugeordnet ist, und wobei eine dritte Bildregion einem Übergangsbereich ("Transition Region") zwischen dem Innenbereich des Soll-Druckobjekts 901 bzw. 1001 und dem Außenbereich des Soll-Druckobjekts 901 bzw. 1001 zugeordnet ist. Die dritte Bildregion wurde dabei durch eine Dilatation der ersten Bildregion oder durch eine Erosion der zweiten Bildregion bestimmt, wobei in den Diagrammen verschiedene Radien der Dilatation bzw. Erosion, insbesondere 1, 2, 3 oder 4 Pixel, verwendet wurden. Die Färbungsgrade ("Underinking", "Overinking") sind als prozentuale Anteile angegeben.

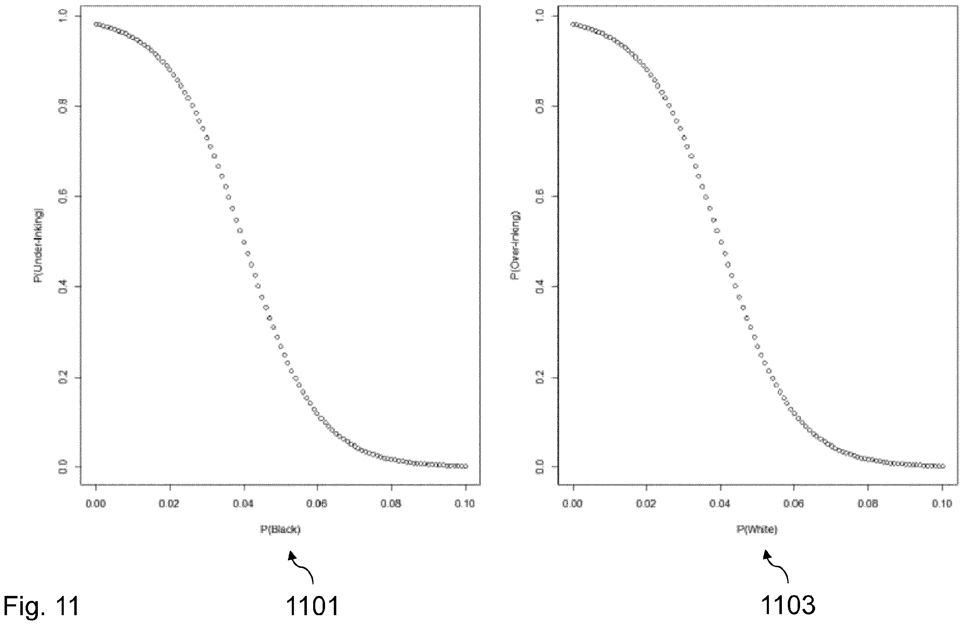

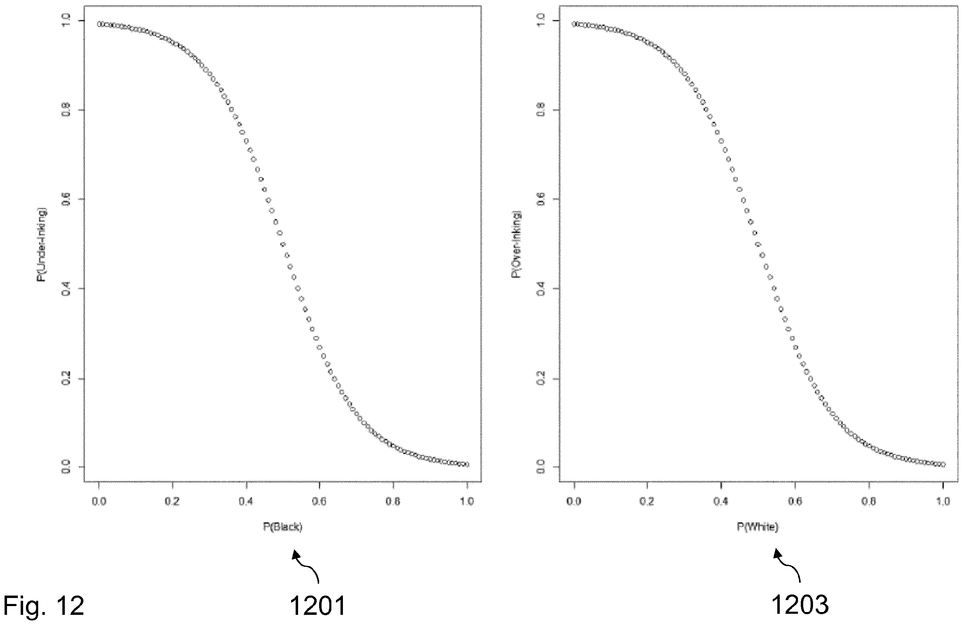

Fig. 11 und Fig. 12 zeigen schematische Diagramme von Wahrscheinlichkeitsverteilungen 1101, 1201 einer Unterfärbung ("Under-Inking") und Wahrscheinlichkeitsverteilungen 1103, 1203 einer Überfärbung ("Over-Inking") einer Bildregion.

Das Diagramm in Fig. 11 bezieht sich auf eine erste Bildregion bzw. eine zweite Bildregion, wobei die erste Bildregion einem Innenbereich eines Soll-Druckobjekts zugeordnet ist, und wobei die zweite Bildregion einem Außenbereich des Soll-Druckobjekts zugeordnet ist. Das Diagramm in Fig. 12 bezieht sich auf eine dritte Bildregion, wobei die dritte Bildregion einem Übergangsbereich zwischen dem Innenbereich des Soll-Druckobjekts und dem Außenbereich des Soll-Druckobjekts zugeordnet ist.

Die Wahrscheinlichkeitsverteilungen basieren auf dem folgenden Zusammenhang:

$$P(B=p\ |A=k)=\frac{1}{1+e^{(p_i-\mu_k)/\sigma}}$$

wobei "k" eine Unterfärbung oder Überfärbung, "i" Schwarz oder Weiß, und $\sigma$ eine Steigungsschätzung repräsentiert. Die Wahrscheinlichkeitsverteilung ist folglich durch eine Sigmoidfunktion charakterisiert.

In dem Diagramm in Fig. 11 werden als anzutrainierende Parameter $\mu_k$ = 4% und $\sigma$ = 1% verwendet. In dem Diagramm in Fig. 12 werden als anzutrainierende Parameter $\mu_k$ = 50% und $\sigma$ = 10% verwendet. Folglich wird eine logistische Likelihood bei 50% angenommen.

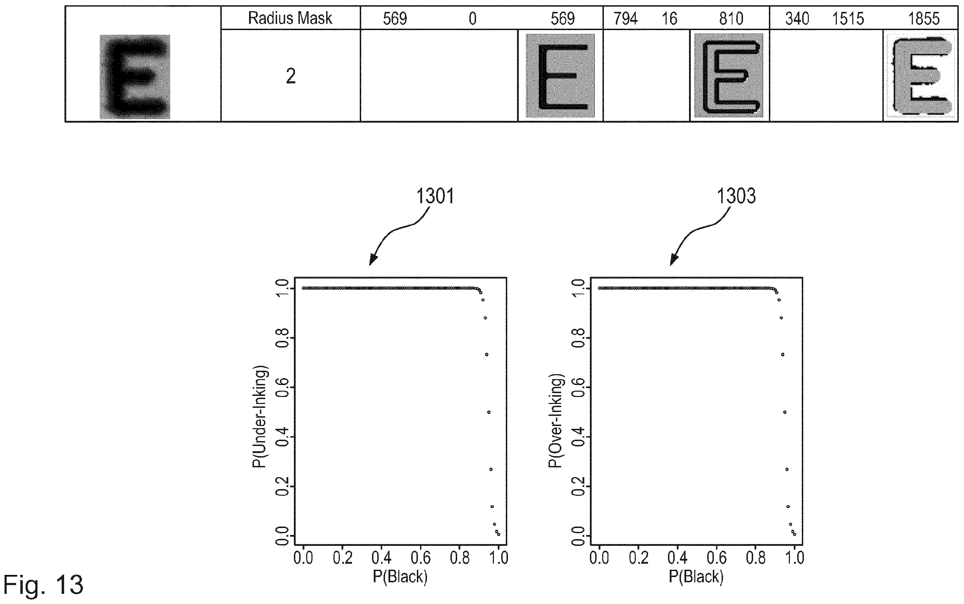

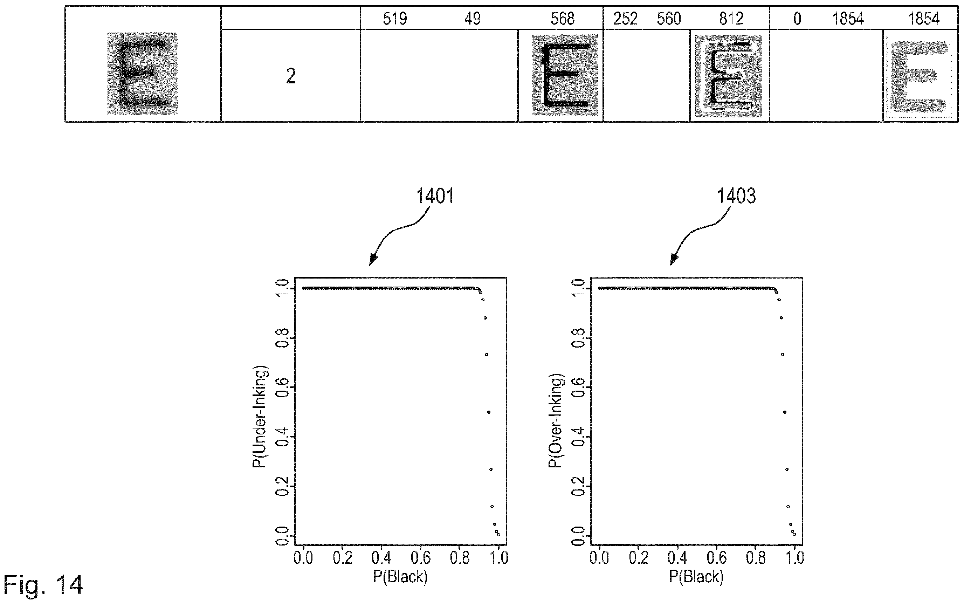

Fig. 13 und Fig. 14 zeigen jeweils ein schematisches Diagramm einer Bestimmung eines Unterfärbungsmaßes und eines Überfärbungsmaßes. Die Bestimmung des Unterfärbungsmaßes und des Überfärbungsmaßes in Fig. 13 basiert auf dem realen Druckobjektbild aus Fig. 9. Die Bestimmung des Unterfärbungsmaßes und des Überfärbungsmaßes in Fig. 14 basiert auf dem weiteren realen Druckobjektbild aus Fig. 10.

Das Unterfärbungsmaß wird dabei als Produkt einer Mehrzahl von Teilunterfärbungsmaßen (Aktivierungsfunktionen "Logistic(...)") bestimmt, wobei jedes Teilunterfärbungsmaß jeweils einer Bildregion zugeordnet ist. Ferner wird das Überfärbungsmaß als Produkt einer Mehrzahl von Teilüberfärbungsmaßen (Aktivierungsfunktionen "Logistic(...)") bestimmt, wobei jedes Teilüberfärbungsmaß jeweils einer Bildregion zugeordnet ist. Die Bestimmung des Unterfärbungsmaßes und des Überfärbungsmaßes basiert dabei auf einer bayesschen Statistik.

Im Falle einer optischen Zeichenerkennung (Optical Character Recognition, OCR) ist ein entsprechendes Training typischerweise empfindlich hinsichtlich rauschinduzierten Pseudoabweichungen. Daher ist eine Vernachlässigung aller Korrelationen bei einer Vielzahl von Anwendungen zumeist erfolgreich.

Die Statistik basiert dabei auf folgendem Zusammenhang:

$$P(B=x|A=k)=\frac{1}{(2\pi)^{\frac{1}{2}}\sigma_k}e^{-\sum(\frac{x_i-\mu_k^i}{2\sigma_k})^2}$$

mit

$$\max(P(A=k_n\ |\ B=x\ )...\ P(A=k_m\ |\ B=x))$$

wobei n...m die signifikantesten Fälle mit p Merkmalen repräsentiert. Durch eine Schätzung des Maximums kann eine Unabhängigkeit von P(B) erreicht werden.

Im Falle einer optischen Zeichenverifikation (Optical Character Verification, OCV) lässt sich das Unterfärbungsmaß beispielsweise bestimmen gemäß:

$$P(UI|Black)=P^{Out}(Black|UI)*P^{Tr}(Black|UI)*P^{In}(Black|UI)*1$$

wobei P(UI|Black) das Unterfärbungsmaß, $P^{Out}$(Black|UI) eine Wahrscheinlichkeit eines Farbauftrages unter der Annahme einer Unterfärbung für einen Außenbereich, $P^{Tr}$(Black|UI) eine Wahrscheinlichkeit eines Farbauftrages unter der Annahme einer Unterfärbung für einen Übergangsbereich, und $P^{In}$(Black|UI) eine Wahrscheinlichkeit eines Farbauftrages unter der Annahme einer Unterfärbung für einen Innenbereich repräsentieren.

Ferner lässt sich das Überfärbungsmaß beispielsweise bestimmen gemäß:

$$P(OI|White)=P^{Out}(White|OI)*P^{Tr}(White|OI)*P^{In}(White|OI)*1$$

wobei P(OI|White) das Überfärbungsmaß, $P^{Out}$(White|OI) eine Wahrscheinlichkeit keines Farbauftrages unter der Annahme einer Überfärbung für einen Außenbereich, $P^{Tr}$(White|OI) eine Wahrscheinlichkeit keines Farbauftrages unter der Annahme einer Überfärbung für einen Übergangsbereich, und $P^{In}$(White|OI) eine Wahrscheinlichkeit keines Farbauftrages unter der Annahme einer Überfärbung für einen Innenbereich repräsentieren.

Die Bestimmung des Überfärbungsmaßes ("OverInking") und des Unterfärbungsmaßes ("UnderInking") in dem Beispiel aus Fig. 13 erfolgt beispielhaft gemäß:

$$\text{OverInking} = \text{Logistic}(0 / 568) * \text{Logistic}(16 / 812) * \text{Logistic}(1515 / 1854) * 1 = 99{,}2\%$$

$$\text{UnderInking} = \text{Logistic}(569 / 568) * \text{Logistic}(794 / 812) * \text{Logistic}(340 / 1854) * 1 = 0{,}005\%$$

wobei die Wahrscheinlichkeitsverteilung 1301 hinsichtlich der Unterfärbung und die Wahrscheinlichkeitsverteilung 1303 hinsichtlich der Überfärbung verwendet werden. Die Regionen ("1") und ("3") wurden mit $\mu_k$ = 95% und $\sigma$ = 1% trainiert, und die Region ("2") wurde mit $\mu_k$ = 50% und $\sigma$ = 10% trainiert.

Die Bestimmung des Überfärbungsmaßes ("OverInking") und des Unterfärbungsmaßes ("UnderInking") in dem Beispiel aus Fig. 14 erfolgt beispielhaft gemäß:

$$\text{OverInking} = \text{Logistic}(49 / 568) * \text{Logistic}(560 / 812) * \text{Logistic}(1854 / 1854) * 1 = 0{,}09\%$$

$$\text{UnderInking} = \text{Logistic}(519 / 568) * \text{Logistic}(252 / 812) * \text{Logistic}(0 / 1854) * 1 = 84{,}7\%$$

wobei die Wahrscheinlichkeitsverteilung 1401 hinsichtlich der Unterfärbung und die Wahrscheinlichkeitsverteilung 1403 hinsichtlich der Überfärbung verwendet werden. Die Regionen ("1") und ("3") wurden mit $\mu_k$ = 95% und $\sigma$ = 1% trainiert, und die Region ("2") wurde mit $\mu_k$ = 50% und $\sigma$ = 10% trainiert.

Ein Druckqualitätsindikator kann anschließend beispielsweise als Quotient zwischen dem Unterfärbungsmaß und dem Überfärbungsmaß gemäß dem folgenden Zusammenhang bestimmt werden:

$$\textbf{Odds:} \quad \frac{P(UI|Black)}{P(OI|White)} \Rightarrow \quad \begin{array}{l} > \mathbf{1 + \varepsilon \Rightarrow Under\ Inking} \\ < \mathbf{1 - \varepsilon \Rightarrow Over\ Inking} \end{array}$$

wobei "Odds" den Druckqualitätsindikator, P(UI|Black) das Unterfärbungsmaß, und P(OI|White) das Überfärbungsmaß repräsentiert. Der Druckqualitätsindikator kann hierbei Werte größer als $1+\varepsilon$ annehmen, wodurch eine Unterfärbung des Druckobjekts auf dem Substrat angezeigt wird, oder Werte kleiner als $1-\varepsilon$, wodurch eine Überfärbung des Druckobjekts auf dem Substrat angezeigt wird. Der Parameter $\varepsilon$ kann beispielsweise durch ein Training vorbestimmt sein.

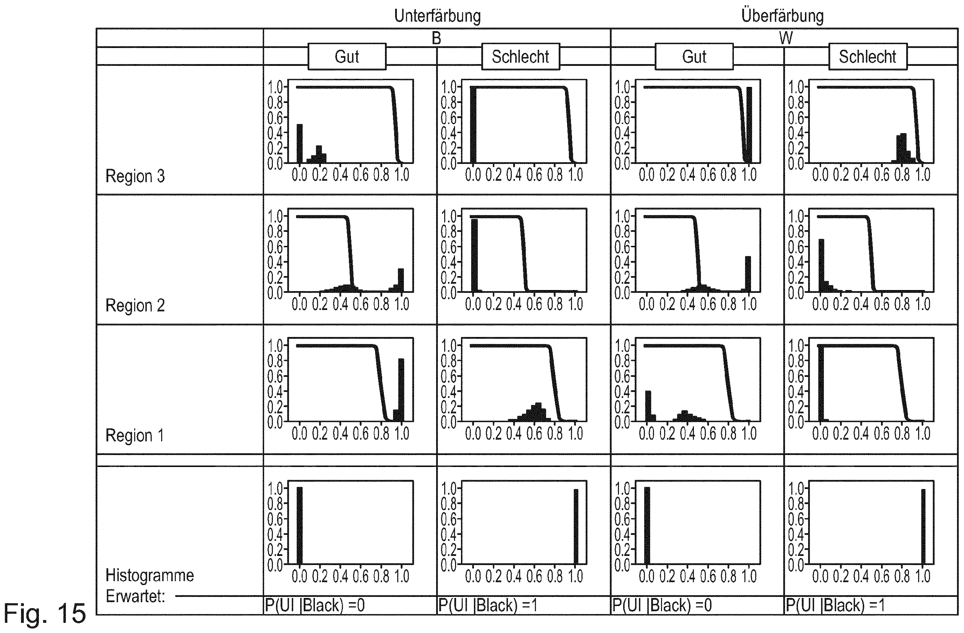

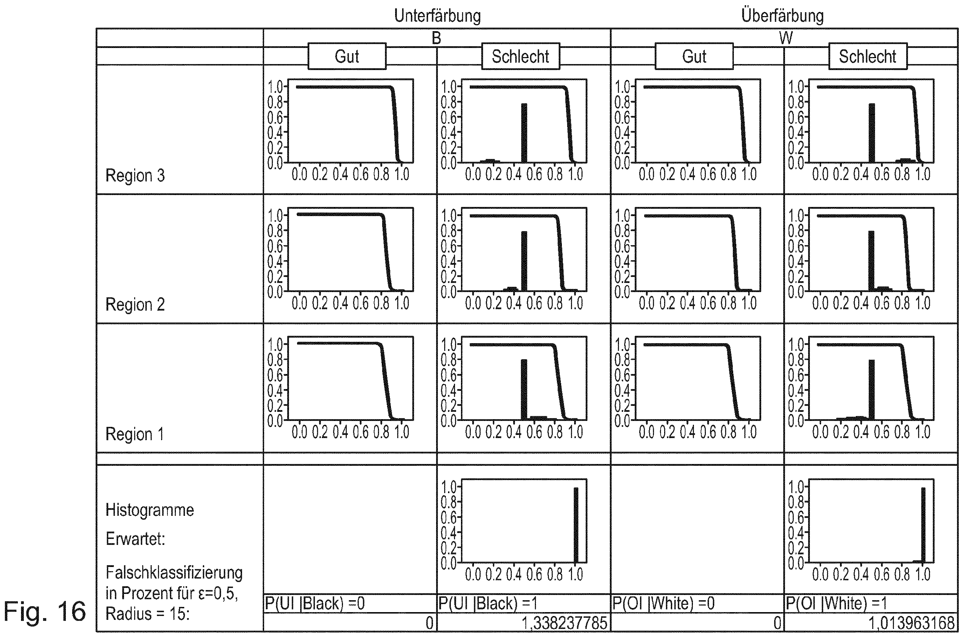

Fig. 15 und Fig. 16 zeigen jeweils ein schematisches Diagramm einer statistischen Auswertung einer Vielzahl von Druckobjektbildern. Bei der statistischen Auswertung wurden 2000 Druckobjektbilder herangezogen.

Die statistische Auswertung verdeutlicht, dass das Konzept zu einer sehr geringen Falschklassifizierung der Druckbilder führt.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

**BEZUGSZEICHENLISTE**

100    Druckinspektionsvorrichtung
101    Bildkamera
103    Prozessor
105    Kommunikationsschnittstelle

200    System
201    Datenbank
203    Kommunikationsnetzwerk

300    Verfahren zur optischen Inspektion eines Druckbildes eines Druckobjekts
301    Optisches Aufnehmen eines Druckobjekts
303    Segmentieren eines Druckobjektbildes
305    Bestimmen eines ersten Färbungsgrades

307     Bestimmen eines zweiten Färbungsgrades
309     Bestimmen eines dritten Färbungsgrades
311     Bestimmen eines Unterfärbungsmaßes
313     Bestimmen eines Überfärbungsmaßes
315     Bestimmen eines Quotienten
317     Vergleichen eines Druckqualitätsindikators

401     Bereitstellen eines Druckobjektbildes
403     Binarisieren des Druckobjektbildes
405     Durchführen einer Kantenerkennung
407     Räumliches Filtern
409     Durchführen einer Aktivierung für die Über-/Unterfärbung
411     Bestimmen eines Über-/Unterfärbungsmaßes
413     Schätzen einer Qualitätsklasse
415     Bestimmen eines Grades

501     Bereitstellen eines Druckobjektbildes
501a    Bereitgestelltes Druckobjektbild
503     Binarisieren des Druckobjektbildes
503a    Binarisiertes Druckobjektbild
505     Ausrichten des Druckobjektbildes
505a    Ausgerichtetes Druckobjektbild
507     Räumliches Filtern
507a    Maskierungsschablone
509     Durchführen einer Aktivierung für die Über-/Unterfärbung
511     Bestimmen eines Über-/Unterfärbungsmaßes
513     Bestimmen eines Grades
513a    Auswertungsdiagramm

701     Idealisiertes Druckobjektbild
703     Kontur des idealisierten Druckbildes
705     Suchregion für Unterfärbung
707     Suchregion für Überfärbung
709     Idealisiertes Druckobjektbild
711     Kontur des idealisierten Druckobjektbildes
713     Suchregion für Unterfärbung
715     Suchregion für Überfärbung

801     Idealisiertes Druckobjektbild
803     Bildregion
805     Bildregion
807     Bildregion
809     Maskierungsschablone
811     Maskierungsschablone
813     Reales Druckobjektbild
815     Bildregion
817     Bildregion
819     Bildregion

901     Soll-Druckobjekt
903     Reales Druckobjektbild
905     Maskierungsschablonen

1001    Soll-Druckobjekt
1003    Reales Druckobjektbild
1005    Maskierungsschablonen

1101    Wahrscheinlichkeitsverteilung

1103    Wahrscheinlichkeitsverteilung
1201    Wahrscheinlichkeitsverteilung
1203    Wahrscheinlichkeitsverteilung

1301    Wahrscheinlichkeitsverteilung
1303    Wahrscheinlichkeitsverteilung

1401    Wahrscheinlichkeitsverteilung
1403    Wahrscheinlichkeitsverteilung

**Patentansprüche**

1. Druckinspektionsvorrichtung (100) zur optischen Inspektion eines Druckbildes eines Druckobjekts, wobei das Druckobjekt auf einem Substrat aufgedruckt ist, wobei dem Druckobjekt ein Soll-Druckobjekt zugeordnet ist, mit:

    einer Bildkamera (101), welche ausgebildet ist, das Druckobjekt auf dem Substrat optisch aufzunehmen, um ein Druckobjektbild zu erhalten; und
    einem Prozessor (103), welcher ausgebildet ist, das Druckobjektbild auf der Basis des Soll-Druckobjekts in Bildregionen zu segmentieren, für eine erste Bildregion einen ersten Färbungsgrad zu bestimmen, wobei der erste Färbungsgrad einen Anteil einer Färbung innerhalb der ersten Bildregion anzeigt, für eine zweite Bildregion einen zweiten Färbungsgrad zu bestimmen, wobei der zweite Färbungsgrad einen Anteil einer Färbung innerhalb der zweiten Bildregion anzeigt, für eine dritte Bildregion einen dritten Färbungsgrad zu bestimmen, wobei der dritte Färbungsgrad einen Anteil einer Färbung innerhalb der dritten Bildregion anzeigt, ein Unterfärbungsmaß für das Druckobjekt unter Verwendung des ersten Färbungsgrades, des zweiten Färbungsgrades und des dritten Färbungsgrades zu bestimmen, wobei das Unterfärbungsmaß eine Wahrscheinlichkeit einer Unterfärbung des Druckobjekts auf dem Substrat repräsentiert, ein Überfärbungsmaß für das Druckobjekt unter Verwendung des ersten Färbungsgrades, des zweiten Färbungsgrades und des dritten Färbungsgrades zu bestimmen, wobei das Überfärbungsmaß eine Wahrscheinlichkeit einer Überfärbung des Druckobjekts auf dem Substrat repräsentiert, einen Quotienten zwischen dem Unterfärbungsmaß und dem Überfärbungsmaß zu bestimmen, um einen Druckqualitätsindikator zu erhalten, und den Druckqualitätsindikator mit einem vorbestimmten Schwellenwert zu vergleichen, um das Druckbild des Druckobjekts optisch zu inspizieren.

2. Druckinspektionsvorrichtung (100) nach Anspruch 1, wobei die erste Bildregion einem Innenbereich des Soll-Druckobjekts zugeordnet ist, wobei die zweite Bildregion einem Außenbereich des Soll-Druckobjekts zugeordnet ist, und wobei die dritte Bildregion einem Übergangsbereich zwischen dem Innenbereich des Soll-Druckobjekts und dem Außenbereich des Soll-Druckobjekts zugeordnet ist.

3. Druckinspektionsvorrichtung (100) nach einem der vorstehenden Ansprüche, wobei der Prozessor (103) ausgebildet ist, eine Dilatation der ersten Bildregion durchzuführen, um die dritte Bildregion zu erhalten, oder wobei der Prozessor (103) ausgebildet ist, eine Erosion der zweiten Bildregion durchzuführen, um die dritte Bildregion zu erhalten.

4. Druckinspektionsvorrichtung (100) nach einem der vorstehenden Ansprüche, wobei dem Soll-Druckobjekt zumindest eine Wahrscheinlichkeitsverteilung zugeordnet ist, wobei die zumindest eine Wahrscheinlichkeitsverteilung eine Wahrscheinlichkeit einer Unterfärbung oder einer Überfärbung einer Bildregion anzeigt, und wobei der Prozessor (103) ausgebildet ist, das Unterfärbungsmaß oder das Überfärbungsmaß ferner unter Verwendung der zumindest einen Wahrscheinlichkeitsverteilung zu bestimmen.

5. Druckinspektionsvorrichtung (100) nach Anspruch 4, mit:
einer Kommunikationsschnittstelle (105), welche ausgebildet ist, mit einer Datenbank (201) über ein Kommunikationsnetzwerk (203) zu kommunizieren, und die zumindest eine Wahrscheinlichkeitsverteilung aus der Datenbank (201) abzurufen.

6. Druckinspektionsvorrichtung (100) nach einem der vorstehenden Ansprüche, wobei der Prozessor (103) ausgebildet ist, das Unterfärbungsmaß als Produkt einer Mehrzahl von Teilunterfärbungsmaßen zu bestimmen, wobei jedes Teilunterfärbungsmaß jeweils einer Bildregion zugeordnet ist, und wobei der Prozessor (103) ausgebildet ist, das Überfärbungsmaß als Produkt einer Mehrzahl von Teilüberfärbungsmaßen zu bestimmen, wobei jedes Teilüberfärbungsmaß jeweils einer Bildregion zugeordnet ist.

7. Druckinspektionsvorrichtung (100) nach einem der vorstehenden Ansprüche, wobei der Prozessor (103) ausgebildet ist, eine optische Erkennung des Druckobjekts auf der Basis des Druckobjektbildes durchzuführen, um einen Druckobjektindikator zu erhalten, und das Soll-Druckobjekt aus einer Mehrzahl von Soll-Druckobjekten auf der Basis des Druckobjektindikators auszuwählen.

8. Druckinspektionsvorrichtung (100) nach einem der vorstehenden Ansprüche, wobei der Prozessor (103) ausgebildet ist, den Druckqualitätsindikator mit einem weiteren vorbestimmten Schwellenwert zu vergleichen, um das Druckbild des Druckobjekts optisch zu inspizieren.

9. Druckinspektionsvorrichtung (100) nach einem der vorstehenden Ansprüche, wobei die Bildkamera (101) ausgebildet ist, das Druckobjektbild als Schwarzweißbild, als Farbbild, als Graustufenbild oder als Mehrkanalbild bereitzustellen, und wobei der Prozessor (103) ausgebildet ist, das Druckobjektbild zu binarisieren.

10. Druckinspektionsvorrichtung (100) nach einem der vorstehenden Ansprüche, wobei der Prozessor (103) ausgebildet ist, eine Ausrichtung des Druckobjekts relativ zu dem Soll-Druckobjekt zu bestimmen, und das Druckobjektbild auf der Basis der Ausrichtung zu drehen.

11. Druckinspektionsvorrichtung (100) nach einem der vorstehenden Ansprüche, wobei der Prozessor (103) ausgebildet ist, ein Größenverhältnis des Druckobjekts relativ zu dem Soll-Druckobjekt zu bestimmen, und das Druckobjektbild auf der Basis des Größenverhältnisses zu skalieren.

12. Druckinspektionsvorrichtung (100) nach einem der vorstehenden Ansprüche, wobei das Druckobjekt und das Soll-Druckobjekt jeweils ein alphanummerisches Zeichen umfasst, oder wobei das Druckobjekt und das Soll-Druckobjekt jeweils eine Grafik umfasst.

13. System (200) zur optischen Inspektion eines Druckbildes eines Druckobjekts, mit:

   einer Druckinspektionsvorrichtung (100) nach einem der Ansprüche 1 bis 12; und
   einer Datenbank (201), in welcher zumindest eine Wahrscheinlichkeitsverteilung gespeichert ist, wobei die zumindest eine Wahrscheinlichkeitsverteilung eine Wahrscheinlichkeit einer Unterfärbung oder einer Überfärbung einer Bildregion anzeigt.

14. Verfahren (300) zur optischen Inspektion eines Druckbildes eines Druckobjekts unter Verwendung einer Druckinspektionsvorrichtung (100), wobei das Druckobjekt auf einem Substrat aufgedruckt ist, wobei dem Druckobjekt ein Soll-Druckobjekt zugeordnet ist, wobei die Druckinspektionsvorrichtung (100) eine Bildkamera (101) und einen Prozessor (103) umfasst, mit:

   optischem Aufnehmen (301) des Druckobjekts auf dem Substrat durch die Bildkamera (101), um ein Druckobjektbild zu erhalten;
   Segmentieren (303) des Druckobjektbildes auf der Basis des Soll-Druckobjekts in Bildregionen durch den Prozessor (103);
   Bestimmen (305) eines ersten Färbungsgrades für eine erste Bildregion durch den Prozessor (103), wobei der erste Färbungsgrad einen Anteil einer Färbung innerhalb der ersten Bildregion anzeigt;
   Bestimmen (307) eines zweiten Färbungsgrades für eine zweite Bildregion durch den Prozessor (103), wobei der zweite Färbungsgrad einen Anteil einer Färbung innerhalb der zweiten Bildregion anzeigt;
   Bestimmen (309) eines dritten Färbungsgrades für eine dritte Bildregion durch den Prozessor (103), wobei der dritte Färbungsgrad einen Anteil einer Färbung innerhalb der dritten Bildregion anzeigt;
   Bestimmen (311) eines Unterfärbungsmaßes für das Druckobjekt unter Verwendung des ersten Färbungsgrades, des zweiten Färbungsgrades und des dritten Färbungsgrades durch den Prozessor (103), wobei das Unterfärbungsmaß eine Wahrscheinlichkeit einer Unterfärbung des Druckobjekts auf dem Substrat repräsentiert;
   Bestimmen (313) eines Überfärbungsmaßes für das Druckobjekt unter Verwendung des ersten Färbungsgrades, des zweiten Färbungsgrades und des dritten Färbungsgrades durch den Prozessor (103), wobei das Überfärbungsmaß eine Wahrscheinlichkeit einer Überfärbung des Druckobjekts auf dem Substrat repräsentiert;
   Bestimmen (315) eines Quotienten zwischen dem Unterfärbungsmaß und dem Überfärbungsmaß durch den Prozessor (103), um einen Druckqualitätsindikator zu erhalten; und
   Vergleichen (317) des Druckqualitätsindikators mit einem vorbestimmten Schwellenwert durch den Prozessor (103), um das Druckbild des Druckobjekts optisch zu inspizieren.

**15.** Computerprogramm mit einem Programmcode zum Ausführen des Verfahrens (300) nach Anspruch 14.

**Claims**

1. Print inspection apparatus (100) for optically inspecting a print image of a print object, the print object being printed on a substrate, the print object being associated with a target print object, comprising:

   an image camera (101) configured to optically record the print object on the substrate to obtain a print object image; and
   a processor (103) configured to segment the print object image based on the target print object into image regions, to determine a first coloration level for a first image region, wherein the first coloration level indicates a proportion of a color within the first image region, to determine a second coloration level for a second image region, wherein the second coloration level indicates a portion of a color within the second image region, to determine a third coloration level for a third image region, wherein the third coloration level indicates a proportion of a color within the third image region, to determine an under-coloration measure for the print object using the first coloration level, the second coloration level and the third coloration level, wherein the under-coloration measure represents a likelihood of under-coloration of the print object on the substrate, to determine an over-coloration measure for the print object using the first coloration level, the second coloration level and the third coloration level, wherein the over-coloration measure represents a likelihood of over-coloration of the print object on the substrate, to determine a quotient between the under-coloration measure and the over-coloration measure to obtain a print quality indicator, and to compare the print quality indicator with a predetermined threshold to optically inspect the print object image of the print object.

2. Print inspection apparatus (100) of claim 1,
   wherein the first image region is associated with an interior region of the target print object, wherein the second image region is associated with an exterior region of the target print object, and wherein the third image region is associated with a transition region between the interior region of the target print object and the exterior region of the target print object.

3. Print inspection apparatus (100) of one of the preceding claims,
   wherein the processor (103) is configured to dilate the first image region to obtain the third image region, or wherein the processor (103) is configured to erode the second image region to obtain the third image region.

4. Print inspection apparatus (100) of one of the preceding claims,
   wherein the target print object is associated with at least one probability distribution, wherein the at least one probability distribution indicates a likelihood of under-coloration or over-coloration of an image region, and wherein the processor (103) is further configured to determine the under-coloration measure or the over-coloration measure using the at least one probability distribution.

5. Print inspection apparatus (100) of claim 4, comprising:
   a communication interface (105) configured to communicate with a database (201) via a communications network (203) and to retrieve the at least one probability distribution from the database (201).

6. Print inspection apparatus (100) of one of the preceding claims,
   wherein the processor (103) is configured to determine the under-coloration measure as a product of a plurality of partial under-coloration measures, wherein each partial under-coloration measure is associated with a respective image region, and wherein the processor (103) is configured to determine the over-coloration measure as a product of a plurality of partial over-coloration measures, wherein each partial over-coloration measure is associated with a respective image region.

7. Print inspection apparatus (100) of one of the preceding claims,
   wherein the processor (103) is configured to perform an optical recognition of the print object based on the print object image to obtain a print object indicator and to select the target print object from a plurality of target print objects based on the print object indicator.

8. Print inspection apparatus (100) of one of the preceding claims,
   wherein the processor (103) is configured to compare the print quality indicator with another predetermined threshold to optically inspect the print image of the print object.

9. Print inspection apparatus (100) of one of the preceding claims,
   wherein the image camera (101) is configured to provide the print object image as a black-and-white image, a color image, a grayscale image, or a multi-channel image, and wherein the processor (103) is configured to binarize the print object image.

10. Print inspection apparatus (100) of one of the preceding claims,
    wherein the processor (103) is configured to determine an orientation of the print object relative to the target print object and to rotate the print object image based on the orientation.

11. Print inspection apparatus (100) of one of the preceding claims,
    wherein the processor (103) is configured to determine proportions of the print object relative to the target print object, and to scale the print object image based on the proportions.

12. Print inspection apparatus (100) of one of the preceding claims,
    wherein the print object and the target print object each comprise an alphanumeric character, or wherein the print object and the target print object each comprise a graphic.

13. System (200) for optically inspecting a print image of a print object, comprising:

    a print inspection apparatus (100) of one of claims 1 to 12; and
    a database (201) in which at least one probability distribution is stored, wherein the at least one probability distribution indicates a probability of under-coloration or over-coloration of an image region.

14. Method (300) for optically inspecting a print image of a print object using a print inspection apparatus (100), wherein the print object is printed on a substrate, wherein the print object is associated with a target print object, wherein the print inspection apparatus (100) comprising an image camera (101) and a processor (103), the method (300) comprising:

    optically recording (301) the print object on the substrate by the image camera (101) to obtain a print object image;
    segmenting the print object image based on the target print object into image regions by the processor (103);
    determining a first coloration level for a first image region by the processor (103), wherein the first coloration level indicates a proportion of a color within the first image region;
    determining a second coloration level for a second image region by the processor (103), wherein the second coloration level indicates a portion of a color within the second image region;
    determining a third coloration level for a third image region by the processor (103), wherein the third coloration level indicates a proportion of a color within the third image region;
    determining an under-coloration measure for the print object using the first coloration level, the second coloration level and the third coloration level by the processor (103), wherein the under-coloration measure represents a likelihood of under-coloration of the print object on the substrate;
    determining an over-coloration measure for the print object using the first coloration level, the second coloration level and the third coloration level by the processor (103), wherein the over-coloration measure represents a likelihood of over-coloration of the print object on the substrate;
    determining a quotient between the under-coloration measure and the over-coloration measure by the processor (103) to obtain a print quality indicator; and
    comparing the print quality indicator with a predetermined threshold by the processor (103) to optically inspect the print image of the print object.

15. Computer program with a program code for carrying out the method (300) according to claim 14.


**Revendications**

1. Dispositif d'inspection d'impression (100) destiné à une inspection optique d'une image imprimée d'un objet d'impression, l'objet d'impression étant imprimé sur un substrat, un objet d'impression nominal étant attribué à l'objet d'impression, comprenant :

une caméra d'imagerie (101) réalisée pour enregistrer optiquement l'objet d'impression sur le substrat afin d'obtenir une image d'objet d'impression ; et

un processeur (103) réalisé pour segmenter l'image d'objet d'impression en régions d'image sur la base de l'objet d'impression nominal, pour déterminer un premier degré de coloration pour une première région d'image, le premier degré de coloration indiquant un pourcentage d'une coloration à l'intérieur de la première région d'image, pour déterminer un deuxième degré de coloration pour une deuxième région d'image, le deuxième degré de coloration indiquant un pourcentage d'une coloration à l'intérieur de la deuxième région d'image, pour déterminer un troisième degré de coloration pour une troisième région d'image, le troisième degré de coloration indiquant un pourcentage d'une coloration à l'intérieur de la troisième région d'image, pour déterminer un niveau de sous-coloration pour l'objet d'impression en utilisant le premier degré de coloration, le deuxième degré de coloration et le troisième degré de coloration, le niveau de sous-coloration représentant une probabilité d'une sous-coloration de l'objet d'impression sur le substrat, pour déterminer un niveau de surcoloration pour l'objet d'impression en utilisant le premier degré de coloration, le deuxième degré de coloration et le troisième degré de coloration, le niveau de surcoloration représentant une probabilité d'une surcoloration de l'objet d'impression sur le substrat, pour déterminer un quotient entre le niveau de sous-coloration et le niveau de surcoloration afin d'obtenir un indicateur de qualité d'impression, et pour comparer l'indicateur de qualité d'impression à une valeur seuil prédéterminée afin de procéder à une inspection optique de l'image imprimée de l'objet d'impression.

2. Dispositif d'inspection d'impression (100) selon la revendication 1, dans lequel la première région d'image est attribuée à une zone intérieure de l'objet d'impression nominal, dans lequel la deuxième région d'image est attribuée à une zone extérieure de l'objet d'impression nominal, et dans lequel la troisième région d'image est attribuée à une zone de transition entre la zone intérieure de l'objet d'impression nominal et la zone extérieure de l'objet d'impression nominal.

3. Dispositif d'inspection d'impression (100) selon l'une quelconque des revendications précédentes, dans lequel le processeur (103) est réalisé pour effectuer une dilatation de la première région d'image afin d'obtenir la troisième région d'image, ou dans lequel le processeur (103) est réalisé pour effectuer une érosion de la deuxième région d'image afin d'obtenir la troisième région d'image.

4. Dispositif d'inspection d'impression (100) selon l'une quelconque des revendications précédentes, dans lequel l'objet d'impression nominal se voit attribuer au moins une distribution de probabilité, dans lequel ladite au moins une distribution de probabilité indique une probabilité de sous-coloration ou de surcoloration d'une région d'image, et dans lequel le processeur (103) est réalisé en outre pour déterminer le niveau de sous-coloration ou le niveau de surcoloration en utilisant ladite au moins une distribution de probabilité.

5. Dispositif d'inspection d'impression (100) selon la revendication 4, comprenant :
une interface de communication (105) réalisée pour communiquer avec une base de données (201) par l'intermédiaire d'un réseau de communication (203) et pour extraire ladite au moins une distribution de probabilité de la base de données (201) .

6. Dispositif d'inspection d'impression (100) selon l'une quelconque des revendications précédentes, dans lequel le processeur (103) est réalisé pour déterminer le niveau de sous-coloration comme le produit d'une pluralité de niveaux de sous-coloration partiels, chaque niveau de sous-coloration partiel étant attribué respectivement à une région d'image, et dans lequel le processeur (103) est réalisé pour déterminer le niveau de surcoloration comme le produit d'une pluralité de niveaux de surcoloration partiels, chaque niveau de surcoloration partiel étant attribué respectivement à une région d'image.

7. Dispositif d'inspection d'impression (100) selon l'une quelconque des revendications précédentes, dans lequel le processeur (103) est réalisé pour effectuer une reconnaissance optique de l'objet d'impression sur la base de l'image d'objet d'impression afin d'obtenir un indicateur d'objet d'impression et pour sélectionner l'objet d'impression nominal parmi une pluralité d'objets d'impression nominaux sur la base de l'indicateur d'objet d'impression.

8. Dispositif d'inspection d'impression (100) selon l'une quelconque des revendications précédentes, dans lequel le processeur (103) est réalisé pour comparer l'indicateur de qualité d'impression à une valeur seuil prédéterminée supplémentaire pour procéder à une inspection optique de l'image imprimée de l'objet d'impression.

9. Dispositif d'inspection d'impression (100) selon l'une quelconque des revendications précédentes, dans lequel la caméra d'imagerie (101) est réalisée pour fournir l'image d'objet d'impression sous forme d'image en noir et blanc, d'image en couleur, d'image en niveaux de gris ou d'image multicanal, et dans lequel le processeur (103) est réalisé pour binariser l'image d'objet d'impression.

10. Dispositif d'inspection d'impression (100) selon l'une quelconque des revendications précédentes, dans lequel le processeur (103) est réalisé pour déterminer un alignement de l'objet d'impression par rapport à l'objet d'impression nominal, et pour faire tourner l'image d'objet d'impression sur la base de l'alignement.

11. Dispositif d'inspection d'impression (100) selon l'une quelconque des revendications précédentes, dans lequel le processeur (103) est réalisé pour déterminer une proportion de l'objet d'impression par rapport à l'objet d'impression nominal, et pour mettre l'image d'objet d'impression à l'échelle sur la base de la proportion.

12. Dispositif d'inspection d'impression (100) selon l'une quelconque des revendications précédentes, dans lequel l'objet d'impression et l'objet d'impression nominal comprennent respectivement un caractère alphanumérique, ou dans lequel l'objet d'impression et l'objet d'impression nominal comprennent respectivement un élément graphique.

13. System (200) permettant une inspection optique d'une image imprimée d'un objet d'impression, comprenant :

un dispositif d'inspection d'impression (100) selon l'une quelconque des revendications 1 à 12 ; et
une base de données (201) dans laquelle est stockée au moins une distribution de probabilité, ladite au moins une distribution de probabilité indiquant une probabilité d'une sous-coloration ou d'une surcoloration d'une région d'image.

14. Procédé (300) permettant une inspection optique d'une image imprimée d'un objet d'impression en utilisant un dispositif d'inspection d'impression (100), dans lequel l'objet d'impression est imprimé sur un substrat, dans lequel un objet d'impression nominal est attribué à l'objet d'impression, dans lequel le dispositif d'inspection d'impression (100) comprend une caméra d'imagerie (101) et un processeur (103), comprenant les étapes consistant à :

enregistrer optiquement (301) l'objet d'impression sur le substrat avec la caméra d'imagerie (101) afin d'obtenir une image d'objet d'impression;
segmenter (303) l'image d'objet d'impression sur la base de l'objet d'impression nominal dans des régions d'image par le processeur (103) ;
déterminer (305) d'un premier degré de coloration pour une première région d'image par le processeur (103), le premier degré de coloration indiquant un pourcentage d'une coloration à l'intérieur de la première région d'image ;
déterminer (307) un deuxième degré de coloration pour une deuxième région d'image par le processeur (103), le deuxième degré de coloration indiquant un pourcentage d'une coloration à l'intérieur de la deuxième région d'image ;
déterminer (309) un troisième degré de coloration pour une troisième région d'image par le processeur (103), le troisième degré de coloration indiquant un pourcentage d'une coloration à l'intérieur de la troisième région d'image ;
déterminer (311) un niveau de sous-coloration pour l'objet d'impression en utilisant le premier degré de coloration, le deuxième degré de coloration et le troisième degré de coloration par le processeur (103), le niveau de sous-coloration représentant une probabilité d'une sous-coloration de l'objet d'impression sur le substrat ;
déterminer (313) un niveau de surcoloration pour l'objet d'impression en utilisant le premier degré de coloration, le deuxième degré de coloration et le troisième degré de coloration par le processeur (103), le niveau de surcoloration représentant une probabilité de surcoloration de l'objet d'impression sur le substrat ;
déterminer (315) un quotient entre le niveau de sous-coloration et le niveau de surcoloration par le processeur (103) afin d'obtenir un indicateur de qualité d'impression ; et
comparer (317) l'indicateur de qualité d'impression à une valeur seuil prédéterminée par le processeur (103) afin de procéder à une inspection optique de l'image imprimée de l'objet d'impression.

15. Programme informatique avec du code programme pour exécuter le procédé (300) selon la revendication 14.

Fig. 1

Fig. 2

EP 3 435 056 B1

**300** ⟍

| Optisches Aufnehmen eines Druckobjekts | 301 |
| Segmentieren eines Druckobjektbildes | 303 |
| Bestimmen eines ersten Färbungsgrades | 305 |
| Bestimmen eines zweiten Färbungsgrades | 307 |
| Bestimmen eines dritten Färbungsgrades | 309 |
| Bestimmen eines Unterfärbungsmaßes | 311 |
| Bestimmen eines Überfärbungsmaßes | 313 |
| Bestimmen eines Quotienten | 315 |
| Vergleichen eines Druckqualitätsindikators | 317 |

Fig. 3

EP 3 435 056 B1

Fig. 4

300

401

403

405

407

409

411

413

415

Fig. 5

P(A) für OCR:

1 ⌐———————————————————————————————————————————————————————⌐
   ⟵———————————————————— Alle Zeichen ————————————————————⟶
0 ⌐                                                         ⌐

P(A) für OCV:

Einzelnes Zeichen

1 ⟶ ⟵
0 ——————————————————————————————————————————————————————————

Fig. 6

EP 3 435 056 B1

Fig. 7

Fig. 8

Fig. 9

| Radius morphologische Operation | Innere Region | | | Underinking | Transition Region | | | Äußere Region | | | Overinking |
|---|---|---|---|---|---|---|---|---|---|---|---|
| | Schwarz | Weiß | # Pixel gesamt | | Schwarz | Weiß | # Pixel gesamt | Schwarz | Weiß | # Pixel gesamt | |
| | 828 | 0 | 828 | 0% | 278 | 2 | 280 | 597 | 1529 | 2126 | 28% |
| 1 | | | | | | | | | | | |
| | 569 | 0 | 569 | 0% | 794 | 16 | 810 | 340 | 1515 | 1855 | 18% |
| 2 | | | | | | | | | | | |
| | 305 | 0 | 305 | 0% | 1280 | 90 | 1370 | 118 | 1441 | 1559 | 8% |
| 3 | | | | | | | | | | | |
| | 58 | 0 | 58 | 0% | 1623 | 273 | 1896 | 22 | 1258 | 1280 | 2% |
| 4 | | | | | | | | | | | |

1001  1003  1005  R=1pxl  R=2pxl  R=3pxl  R=4pxl

| Radius morphologische Operation | Innere Region | | | Underinking | Transition Region | | | Äußere Region | | | Overinking |
|---|---|---|---|---|---|---|---|---|---|---|---|
| | Schwarz | Weiß | # Pixel gesamt | | Schwarz | Weiß | # Pixel gesamt | Schwarz | Weiß | # Pixel gesamt | |
| | 685 | 142 | 827 | 17% | 72 | 210 | 282 | 14 | 2111 | 2125 | 1% |
| 1 | | | | | | | | | | | |
| | 519 | 49 | 568 | 9% | 252 | 560 | 812 | 0 | 1854 | 1854 | 0% |
| 2 | | | | | | | | | | | |
| | 295 | 7 | 302 | 2% | 476 | 900 | 1376 | 0 | 1556 | 1556 | 0% |
| 3 | | | | | | | | | | | |
| | 55 | 0 | 55 | 0% | 716 | 1186 | 1902 | 0 | 1277 | 1277 | 0% |
| 4 | | | | | | | | | | | |

Fig. 10

EP 3 435 056 B1

Fig. 11                    1101                                        1103

1203

1201

Fig. 12

EP 3 435 056 B1

| | Radius Mask | 569 | 0 | 569 | 794 | 16 | 810 | 340 | 1515 | 1855 |
|---|---|---|---|---|---|---|---|---|---|---|
| | 2 | | | | | | | | | |

1301

1303

Fig. 13

EP 3 435 056 B1

| | | | 519 | 49 | 568 | 252 | 560 | 812 | 0 | 1854 | 1854 |
|---|---|---|---|---|---|---|---|---|---|---|---|
| E | 2 | | | | E | | | E | | | E |

1401

1403

P(Under-Inking) vs P(Black)

P(Over-Inking) vs P(Black)

Fig. 14

Fig. 15

Fig. 16

| | Unterfärbung | | Überfärbung | |
| | B | | W | |
| | Gut | Schlecht | Gut | Schlecht |
|---|---|---|---|---|
| Region 3 | | | | |
| Region 2 | | | | |
| Region 1 | | | | |
| Histogramme Erwartet: Falschklassifizierung in Prozent für ε=0,5, Radius = 15: | | P(UI \|Black) =0 | P(UI \|Black) =1 | P(OI \|White) =0 | P(OI \|White) =1 |
| | | 0 | 1,338237785 | 0 | 1,013963168 |

EP 3 435 056 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0283899 A2